# EUROPÄISCHE PATENTSCHRIFT

(11) **EP 2 271 689 B1**
(45) Veröffentlichungstag und Bekanntmachung des Hinweises auf die Patenterteilung: **16.11.2011**
(21) Anmeldenummer: 09722893.6
(22) Anmeldetag: 17.03.2009
(51) Int. Cl.: C08G 18/28, C08G 18/32, C08G 18/42, C08G 18/79, C08K 3/32, C09D 175/04

(54) **BESCHICHTUNGSZUSAMMENSETZUNG, VERFAHREN ZU IHRER HERSTELLUNG, IHRE VERWENDUNG UND MIT IHR BESCHICHTETE SUBSTRATE**
COATING COMPOSITION, METHOD FOR THE PRODUCTION THEREOF, USE THEREOF AND SUBSTRATES COATED THEREWITH
COMPOSITION DE REVÊTEMENT, SON PROCÉDÉ DE FABRICATION, SON UTILISATION ET SUBSTRATS REVÊTUS DE CETTE COMPOSITION

(30) Priorität: 19.03.2008 DE 102008015104
(43) Veröffentlichungstag der Anmeldung: 12.01.2011
(73) Patentinhaber: BASF Coatings GmbH, 48165 Münster (DE)
(72) Erfinder: STENTRUP, Manuela, 59387 Ascheberg (DE); RICHTER, Bernd, 48165 Münster (DE); RINK, Heinz-Peter, 48153 Münster (DE)
(74) Vertreter: Leifert, Elmar
(86) Internationale Anmeldenummer: PCT/EP2009/001956
(87) Internationale Veröffentlichungsnummer: WO 2009/115294

(56) Entgegenhaltungen:
- EP-A- 0 893 458
- DE-B3-102005 036 630
- US-A- 5 214 086
- US-A1- 2007 129 527

## Beschreibung

Die vorliegende Erfindung betrifft Beschichtungszusammensetzungen umfassend mindestens eine isocyanathaltige Verbindung, mindestens eine hydroxylgruppenhaltige Verbindung, mindestens ein Aldimin und/oder Ketimin, einen oder mehrere Füllstoffe, eines oder mehrere Pigmente, wenigstens ein Lösungsmittel und optional eines oder mehrere Additive. Die Erfindung betrifft auch Verfahren zur Herstellung dieser Beschichtungszusammensetzungen, ihre Verwendung als Lack im Autoreparaturbereich, im Fahrzeug-, Nutzfahrzeug- (auch Mulden, Chassis) und Landmaschinen- und Eisenbahnenbereich und Maschinen. Bevorzugt werden die erfindungsgemäßen Beschichtungszusammensetzungen als Grundierung (Primer) mit und ohne chemische Vorbehandlung wie Eisen oder Zinkphosphatierung, mit und ohne mechanische Vorbehandlung wie Sandstrahlen, Schleifen oder Ähnliches verwendet.

Beschichtungszusammensetzungen, insbesondere durch Umsetzung von isocyanathaltigen Harzen mit Polyolharzen hergestellte Polyurethanbeschichtungen, sind gut bekannt. Diese Beschichtungen zeichnen sich bekanntlich durch eine Reihe hervorragender Eigenschaften einschließlich hoher Dauerhaftigkeit und Chemikalienbeständigkeit aus. Aufgrund ihrer guten Glamour-Eigenschaften eignen sie sich ausgezeichnet für Autoreparatur, Nutzfahrzeug- und Automobilreparaturanwendungen sowie für technische Anwendungen. Im Vergleich zu wässrigen Zusammensetzungen weisen sie wesentlich bessere Trocknungszeiten und einen verbesserten Korrosionsschutz auf. Bei diesen Beschichtungen liefert jedoch die Polyolkomponente aufgrund der Bildung von Wasserstoffbrückenbindungen und aufgrund des Molekulargewichts der Polymerhauptkette den größten Beitrag zur Gesamtviskosität der Beschichtung, wodurch die Freiheit eingeschränkt wird, bei der Formulierung andere Substanzen einzuarbeiten und die Spezifikationen bezüglich des Applikationsfeststoffgehalts zu erfüllen. Die Verringerung des Molekulargewichts des Polyols führt letztlich zu langsamem Netzwerkaufbau, sofern man keine beträchtlichen Energiemengen einträgt.

Durch die Verwendung von mehr Lösungsmitteln kann die Gesamtviskosität der Beschichtung zwar verringert und so der Netzwerkaufbau beschleunigt werden, die Verwendung hoher Mengen an Lösungsmitteln ist aber bedenklich für die Umwelt. Insbesondere erfüllen Beschichtungszusammensetzungen mit hohen Anteilen flüchtiger organischer Verbindungen, insbesondere Lösungsmitteln (VOC) nicht die Bestimmungen von Richtlinien, in denen der Maximalgehalt an VOC festgelegt wird. In der Zukunft werden dabei sehr niedrige Lösemittelgehalte bzw. VOC-Gehalte von maximal 280 g/l zu realisieren sein.

Die Eigenschaften feststoffreicher polyolhaltiger Polyurethanbeschichtungen können auch durch Verwendung reaktiver Verdünnungsmittel (Reaktiwerdünner) verbessert werden. Eine Anwendung dieser Technik wurde durch die US-PS 5,214,086 aufgezeigt. Dort wird die Verwendung von Oligoaldiminen, Oligoketiminen und gehinderten Oligoaminen zur Modifizierung von Polyolzusammensetzungen beschrieben, die zu einer Verringerung der Viskositäten der Mischungen unter Aufrechterhaltung und oftmals Verbesserung des Netzwerkaufbaus und der physikalischen Eigenschaften insgesamt führt. Auf Aluminium und auf MultistoffSubstraten zeigen diese Beschichtungszusammensetzungen jedoch sowohl im belasteten als auch im unbelasteten Zustand des Substrats eine unbefriedigende Haftung.

Haftung auf Aluminium wird üblicherweise anderweitig durch die Verwendung chromathaltiger Füllstoffe erzielt (Lückert, Pigmente + Füllstofftabellen, Lückert Verlag, ISBN 3-927342-03-3; Glasurithandbuch von 1984, Vincentz Verlag, ISBN 3-87870-192-6; Peter Volk in "Metalloberfläche", Sonderdruck 5/2006). Wegen der Umweltbelastung soll jedoch zur Erzielung der gewünschten Eigenschaften auf die Verwendung von Chromat verzichtet werden.

Es ist also Aufgabe der Erfindung, feststoffreiche Beschichtungszusammensetzungen zu entwickeln, die chromatfreie Füllstoffe und Pigmente enthalten und auf Aluminium, Stahl und/oder Multistoffsubstraten eine gute Haftung im belasteten und im unbelasteten Zustand zeigen. Bei Bewitterung sollen die Beschichtungszusammensetzungen weiterhin gute Eigenschaften zeigen. Schließlich sollen sie Eigenschaften wie die Vermittlung eines ausreichenden Korrosionsschutzes und zufriedenstellende Trocknungszeiten aufweisen. Je nach Einsatzgebiet muss hier eine Schleifbarkeit nach dem Trocknen oder ein gute Überlackierbarkeit für Naß-innaß-Applikationen mit konventionellen und wässrigen Beschichtungsmitteln gegeben sein.

Die Aufgabe wird gelöst durch eine Beschichtungszusammensetzung umfassend 10 bis 20 Gew.-% mindestens einer isocyanathaltigen Verbindung, 5 bis 20 Gew.-% mindestens einer hydroxylgruppenhaltigen Verbindung, 5 bis 25 Gew.-% mindestens eines Aldimins und/oder Ketimins, 2.5 - 60 Gew.-% eines oder mehrerer Füllstoffe, farbgebende Pigmente und Korrosionsschutzpigmente, wobei als der bzw. ein Füllstoff Calciumhydrogenphosphat in einem Massenanteil von 1.0 - 20 Gew.-% enthalten ist, jeweils bezogen auf das Gesamtgewicht der Beschichtungszusammensetzung, und mindestens ein Lösungsmittel, wobei mindestens eine Silanverbindung der allgemeinen Formel (I), 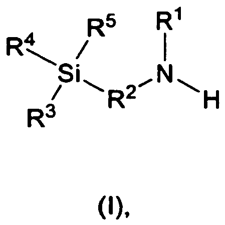 worin
R¹ für H; unsubstituiertes oder wenigstens einfach substituiertes Alkyl; unsubstituiertes oder wenigstens einfach substituiertes Heteroalkyl; unsubstituiertes oder wenigstens einfach substituiertes Cycloalkyl oder Cycloalkenyl; unsubstituiertes oder wenigstens einfach substituiertes Heterocycloalkyl oder Heterocycloalkenyl; unsubstituiertes oder wenigstens einfach substituiertes Aryl oder für unsubstituiertes oder wenigstens einfach substituiertes -(Alkylen)-Aryl oder -(Alkenylen)-Aryl steht;
R² für unsubstituiertes oder wenigstens einfach substituiertes -(Alkylen)-; unsubstituiertes oder wenigstens einfach substituiertes -(Heteroalkylen)-; unsubstituiertes oder wenigstens einfach substituiertes -(Arylen)-; unsubstituiertes oder wenigstens einfach substituiertes -(Alkylen)-(Arylen)- oder für unsubstituiertes oder wenigstens einfach substituiertes -(Heteroalkylen)-(Arylen)- steht;
R³ für -O-R⁶; -C(=O)-R⁷; H; unsubstituiertes oder substituiertes Alkyl; unsubstituiertes oder substituiertes Heteroalkyl; unsubstituiertes oder wenigstens einfach substituiertes Aryl oder für unsubstituiertes oder wenigstens einfach substituiertes -(AlkylenrAryl oder -(Alkenylen)-Aryl steht;
R⁴ für -O-R⁸; -C(=O)-R⁹; H; unsubstituiertes oder substituiertes Alkyl; unsubstituiertes oder substituiertes Heteroalkyl; unsubstituiertes oder wenigstens einfach substituiertes Aryl oder für unsubstituiertes oder wenigstens einfach substituiertes -(Alkylen)-Aryl oder -(Alkenylen)-Aryl steht;
R⁵ für -O-R¹⁰; -C(=O)-R¹¹; H; unsubstituiertes oder substituiertes Alkyl; unsubstituiertes oder substituiertes Heteroalkyl; unsubstituiertes oder wenigstens einfach substituiertes Aryl oder für unsubstituiertes oder wenigstens einfach substituiertes -(Alkylen)-Aryl oder -(Alkenylen)-Aryl steht;
und
R⁶, R⁷, R⁸, R⁹, R¹⁰ und R¹¹, unabhängig voneinander, jeweils für H; unsubstituiertes oder substituiertes Alkyl oder für unsubstituiertes oder substituiertes Heteroalkyl stehen;

in einem Massenanteil von 0.1 bis 5.0 Gew.-% bezogen auf das Gesamtgewicht der Beschichtungszusammensetzung enthalten ist, wobei die Massenanteile der genannten Bestandteile zusammen mit dem Lösungsmittel 100 Gew.-% ergeben.

Die erfindungsgemäßen Beschichtungszusammensetzungen enthalten im Allgemeinen ein Lösungsmittel. Erfindungsgemäße Beschichtungszusammensetzungen können anstelle der Lösungsmittel auch Reaktiwerdünner enthalten, die ebenfalls zu einer Reduzierung der Viskosität führen können.

Diese Beschichtungszusammensetzungen haften gut bis sehr gut auf Aluminium, Stahl und/oder Multistoffsubstraten, weisen gute Eigenschaften bei Bewitterung auf, vermitteln einen guten bis sehr guten Korrosionsschutz, trocknen schnell und weisen eine gute Schleifbarkeit auf.

Der Begriff "Alkyl" umfasst im Sinne der vorliegenden Erfindung azyklische gesättigte Kohlenwasserstoffreste, die verzweigt oder geradkettig sowie unsubstituiert oder wenigstens einfach substituiert sein können mit wie im Fall von C₁₋₁₂-Alkyl 1 bis 12 (d.h. 1, 2, 3, 4, 5, 6, 7, 8, 9, 10, 11 oder 12) C-Atomen bzw. mit wie im Fall von C₁₋₆-Alkyl 1 bis 6 (d. h. 1, 2, 3, 4, 5 oder 6) C-Atomen. Sofern einer oder mehrere der Substituenten für einen Alkyl-Rest stehen oder einen Alkyl-Rest aufweisen, der einfach oder mehrfach substituiert ist, kann dieser bevorzugt mit ggf. 1, 2, 3, 4 oder 5, besonders bevorzugt mit 1, 2 oder 3, Substituenten unabhängig voneinander ausgewählt aus der Gruppe bestehend aus F, Cl, Br, I, -NO₂, -CN, -OH, -SH, -NH₂, -N(C₁₋₅-Alkyl)₂, -C(=O)-C₁₋₅-Alkyl, -C(=O)-Phenyl, -C(=O)-OH, -C(=O)-O-C₁₋₅-Alkyl, -C(=O)-NH₂, -C(=O)NH-C₁₋₅-Alkyl und -C(=O)-N(C₁₋₅-Alkyl)₂ substituiert sein, wobei die vorstehend genannten C₁₋₅-Alkyl-Reste jeweils linear oder verzweigt sein können und die vorstehend genannten Phenyl-Reste bevorzugt mit 1, 2, 3, 4 oder 5 Substituenten unabhängig voneinander ausgewählt aus der Gruppe bestehend aus F, Cl, Br, I, -CN, -CF₃, Methyl, Ethyl, n-Propyl, Isopropyl, n-Butyl, 2-Butyl, Isobutyl und tert-Butyl substituiert sein können. Besonders bevorzugte Substituenten können unabhängig voneinander ausgewählt werden aus der Gruppe bestehend aus F, Cl, Br, I, -NO₂ und -CN.

Als geeignete C₁₋₁₂-Alkyl-Reste, die unsubstituiert oder einfach oder mehrfach substituiert sein können, seien beispielsweise Methyl, Ethyl, n-Propyl, Isopropyl, n-Butyl, Isobutyl, 2-Butyl, tert-Butyl, n-Pentyl, 2-Pentyl, 3-Pentyl, iso-Pentyl, neo-Pentyl, n-Hexyl, 2-Hexyl, 3-Hexyl, n-Heptyl, n-Octyl, -C(H)(C₂H₅)₂, -C(H)(n-C₃H₇)₂ und -CH₂-CH₂-C(H)(CH₃)-(CH₂)₃-CH₃ genannt.

Als geeignete C₁₋₆-Alkyl-Reste seien beispielsweise Methyl, Ethyl, n-Propyl, Isopropyl, n-Butyl, Isobutyl, 2-Butyl, tert-Butyl, n-Pentyl, 2-Pentyl, 3-Pentyl, iso-Pentyl, neo-Pentyl, n-Hexyl, 2-Hexyl und 3-Hexyl genannt.

Unter mehrfach substituierten Alkyl-Resten sind solche Alkyl-Reste zu verstehen, die entweder an verschiedenen oder an gleichen C-Atomen mehrfach, bevorzugt zwei- oder dreifach, substituiert sind, beispielsweise dreifach am gleichen C-Atom wie im Fall von -CF₃ oder an verschiedenen Stellen wie im Fall von -(CHCl)-(CH₂F). Die Mehrfachsubstitution kann mit dem gleichen oder mit verschiedenen Substituenten erfolgen. Als geeignete substituierte Alkyl-Reste seien beispielsweise -CF₃, -CF₂H, -CFH₂, -(CH₂)-CN, -(CH₂)-(CF₃), -(CH₂)-(CHF₂), -(CH₂)-(CH₂F), -(CH₂)-(CH₂)-CN, -(CF₂)-(CF₃) und -(CH₂)-(CH₂)-(CF₃) genannt.

Der Begriff "Alkenyl" umfasst im Sinne der vorliegenden Erfindung azyklische ungesättigte Kohlenwasserstoffreste, die verzweigt oder geradkettig sowie unsubstituiert oder wenigstens einfach substituiert sein können und wenigstens eine Doppelbindung, bevorzugt 1, 2 oder 3 Doppelbindungen, aufweisen, mit wie im Fall von C₂₋₁₂-Alkenyl 2 bis 12 (d. h. 2, 3, 4, 5, 6, 7, 8, 9, 10, 11 oder 12) C-Atomen bzw. mit wie im Fall von C₂₋₆-Alkenyl 2 bis 6 (d. h. 2, 3, 4, 5 oder 6) C-Atomen. Sofern einer oder mehrere der Substituenten für einen Alkenyl-Rest stehen oder einen Alkenyl-Rest aufweisen, der einfach oder mehrfach substituiert ist, kann dieser bevorzugt mit ggf. 1, 2, 3, 4 oder 5, besonders bevorzugt mit 1, 2 oder 3, Substituenten unabhängig voneinander ausgewählt aus der Gruppe bestehend aus F, Cl, Br, I, -NO₂, -CN, -OH, -SH, -NH₂, -N(C₁₋₅-Alkyl)₂, -C(=O)-C₁₋₅-Alkyl, -C(=O)-Phenyl, -C(=O)-OH, -C(=O)-O-C₁₋₅-Alkyl, -C(=O)-NH₂, -C(=O)-NH-C₁-₅-Alkyl und -C(=O)-N(C₁₋₅-Alkyl)₂ substituiert sein, wobei die vorstehend genannten C₁₋₅-Alkyl-Reste jeweils linear oder verzweigt sein können und die vorstehend genannten Phenyl-Reste bevorzugt mit 1, 2, 3, 4 oder 5 Substituenten unabhängig voneinander ausgewählt aus der Gruppe bestehend aus F, Cl, Br, I, -CN, -CF₃, Methyl, Ethyl, n-Propyl, Isopropyl, n-Butyl, 2-Butyl, Isobutyl und tert-Butyl substituiert sein können. Besonders bevorzugte Substituenten können unabhängig voneinander ausgewählt werden aus der Gruppe bestehend aus F, Cl, Br, I, -NO₂ und -CN.

Als geeignete C₂-₁₂-Alkenyl-Reste seien beispielsweise Ethenyl, 1-Propenyl, 2-Propenyl, 1-Butenyl, 2-Butenyl, 3-Butenyl, 1-Pentenyl, 2-Pentenyl, 3-Pentenyl, 4-Pentenyl, Hexenyl, -CH=CH-CH=CH-CH₃ und -CH₂-CH₂-CH=CH₂ genannt.

Unter mehrfach substituierten Alkenyl-Resten sind solche Alkenyl-Reste zu verstehen, die entweder an verschiedenen oder an gleichen C-Atomen mehrfach, bevorzugt zweifach, substituiert sind, beispielsweise zweifach am gleichen C-Atom wie im Fall von -CH=CCl₂ oder an verschiedenen Stellen wie im Fall von -CCI=CH-(CH₂)-Cl. Die Mehrfachsubstitution kann mit dem gleichen oder mit verschiedenen Substituenten erfolgen. Als geeignete substituierte Alkenyl-Reste seien beispielsweise -CH=CH-(CH₂)-F, -CH=CH-(CH₂)-Cl und -CH=CH-CN genannt.

Der Begriff "Heteroalkyl" bezeichnet einen wie vorstehend beschriebenen Alkyl-Rest, in dem ein oder mehrere C-Atome jeweils durch ein Heteroatom unabhängig voneinander ausgewählt aus der Gruppe bestehend aus Sauerstoff, Schwefel und Stickstoff (NH) ersetzt wurden. Heteroalkyl-Reste können bevorzugt 1, 2 oder 3 Heteroatom(e) unabhängig voneinander ausgewählt aus der Gruppe bestehend aus Sauerstoff, Schwefel und Stickstoff (NH) als Kettenglied(er) aufweisen. Besonders bevorzugt ist das Heteroatom ein Sauerstoff- oder Schwefelatom. Ganz besonders bevorzugt ist das Heteroatom ein Sauerstoffatom. Heteroalkyl-Reste können bevorzugt 2- bis 12-gliedrig, besonders bevorzugt 2- bis 6-gliedrig, sein.

Als geeignete Heteroalkyl-Reste, die unsubstituiert oder einfach oder mehrfach substituiert sein können, seien beispielsweise -CH₂-O-CH₃, -CH₂-O-C₂H₅, -CH₂-O-CH(CH₃)₂, -CH₂-O-C(CH₃)₃, -CH₂-CH₂-O-CH₃, -CH₂-CH₂-O-C₂H₅, -CH₂-CH₂-O-CH(CH₃)₂ -CH₂-CH₂-O-C(CH₃)₃, -CH₂-S-CH₂-O-CH₃, -CH₂-O-CH₂-O-C₂H₅, -CH₂-O-CH₂-O-CH(CH₃)₂, -CH₂-S-CH₂-O-C(CH₃)₃, -CH₂-O-CH₂-S-CH₃, -CH₂-O-CH₂-S-C₂H₅ und -CH₂-O-CH₂-S-CH(CH₃)₂ genannt.

Als geeignete substituierte Heteroalkyl-Reste seien beispielsweise -(CH₂)-O-(CF₃), -(CH₂)-O-(CHF₂), -(CH₂)-O-(CH₂F), -(CF₂)-O-(CF₃) und -(CH₂)-(CH₂)-(CH₂)-O-(CF₃) genannt.

Der Begriff "Cycloalkyl" bedeutet im Sinne der vorliegenden Erfindung einen zyklischen gesättigten Kohlenwasserstoff-Rest mit bevorzugt 3, 4, 5, 6, 7, 8 oder 9 C-Atomen, besonders bevorzugt mit 3, 4, 5, 6 oder 7 C-Atomen, ganz besonders bevorzugt mit 5 oder 6 C-Atomen, wobei der Rest unsubstituiert oder einfach substituiert oder mehrfach gleich oder verschieden substituiert sein kann.

Als geeignete C₃₋₉-Cycloalkyl-Reste, die unsubstituiert oder einfach oder mehrfach substituiert sein können, seien beispielsweise Cyclopropyl, Cyclobutyl, Cyclopentyl, Cyclohexyl, Cycloheptyl, Cyclooctyl und Cyclononyl genannt. Als geeignete C₃₋₇-Cycloalkyl-Reste seien Cyclopropyl, Cyclobutyl, Cyclopentyl, Cyclohexyl und Cycloheptyl genannt.

Der Begriff "Heterocycloalkyl" bedeutet im Sinne der vorliegenden Erfindung einen zyklischen gesättigten Kohlenwasserstoff-Rest mit bevorzugt 3, 4, 5, 6, 7, 8 oder 9 C-Atomen, besonders bevorzugt mit 3, 4, 5, 6 oder 7 Atomen, ganz besonders bevorzugt mit 5 oder 6 C-Atomen, in dem ein oder mehrere C-Atome jeweils durch ein Heteroatom unabhängig voneinander ausgewählt aus der Gruppe bestehend aus Sauerstoff, Schwefel und Stickstoff (NH) ersetzt wurden. Heterocycloalkyl-Reste können bevorzugt 1, 2 oder 3 Heteroatom(e) unabhängig voneinander ausgewählt aus der Gruppe bestehend aus Sauerstoff, Schwefel und Stickstoff (NH) als Ringglied(er) aufweisen. Besonders bevorzugt ist das Heteroatom ein Sauerstoff- oder Schwefelatom. Ganz besonders bevorzugt ist das Heteroatom ein Sauerstoffatom. Ein Heterocycloalkyl-Rest kann unsubstituiert oder einfach substituiert oder mehrfach gleich oder verschieden substituiert sein. Heterocycloalkyl-Reste können bevorzugt 3- bis 9-gliedrig, besonders bevorzugt 3- bis 7-gliedrig, ganz besonders bevorzugt 5- bis 7-gliedrig, sein.

Als geeignete 3- bis 9-gliedrige Heterocycloalkyl-Reste, die unsubstituiert oder einfach oder mehrfach substituiert sein können, seien beispielsweise Tetrahydrofuranyl, Tetrahydrothiophenyl, Tetrahydropyranyl, Oxetanyl, (1,3)-Dioxolan-2-yl, Isoxazolidinyl, Oxazolidinyl und (1,2,4)-Oxadiazolidinyl genannt. Als geeignete 5- bis 7-gliedrige Heterocycloalkyl-Reste seien beispielsweise Tetrahydrofuranyl, Tetrahydrothiophenyl, Tetrahydropyranyl, Oxetanyl und (1,3)-Dioxolan-2-yl genannt.

Der Begriff "Heterocycloalkenyl" bedeutet im Sinne der vorliegenden Erfindung einen zyklischen ungesättigten Kohlenwasserstoff-Rest mit bevorzugt 4, 5, 6, 7, 8 oder 9 C-Atomen, besonders bevorzugt mit 4, 5, 6 oder 7 Atomen, ganz besonders bevorzugt mit 5 oder 6 C-Atomen, der wenigstens eine Doppelbindung, vorzugsweise eine Doppelbindung, aufweist und in dem ein oder mehrere C-Atome jeweils durch ein Heteroatom unabhängig voneinander ausgewählt aus der Gruppe bestehend aus Sauerstoff, Schwefel und Stickstoff (NH) ersetzt wurden. Heterocycloalkenyl-Reste können bevorzugt 1, 2 oder 3 Heteroatom(e) unabhängig voneinander ausgewählt aus der Gruppe bestehend aus Sauerstoff, Schwefel und Stickstoff (NH) als Ringglied(er) aufweisen. Besonders bevorzugt ist das Heteroatom ein Sauerstoff- oder Schwefelatom. Ganz besonders bevorzugt ist das Heteroatom ein Sauerstoffatom. Ein Heterocycloalkenyl-Rest kann unsubstituiert oder einfach substituiert oder mehrfach gleich oder verschieden substituiert sein. Heterocycloalkenyl-Reste können bevorzugt 4- bis 9-gliedrig, besonders bevorzugt 4- bis 7-gliedrig, ganz besonders bevorzugt 5- bis 7-gliedrig, sein.

Als geeignete Heterocycloalkenyl-Reste bzw. als geeignete 5- bis 7-gliedrige Heterocycloalkenyl-Reste, die unsubstituiert oder einfach oder mehrfach substituiert sein können, seien beispielsweise (2,3)-Dihydrofuranyl, (2,5)-Dihydrofuranyl, (2,3)-Dihydrothienyl, (2,5)-Dihydrothienyl, (2,3)-Dihydrooxazolyl, (4,5)-Dihydrooxazolyl, (2,5)-Dihydrooxazolyl und Dihydropyranyl genannt.

Sofern einer oder mehrere der Substituenten für einen Cycloalkyl-Rest, Heterocycloalkyl-Rest, Cycloalkenyl-Rest oder Heterocycloalkenyl-Rest stehen oder einen solchen Rest aufweisen, der einfach oder mehrfach substituiert ist, kann dieser bevorzugt mit ggf. 1, 2, 3, 4 oder 5, besonders bevorzugt mit ggf. 1, 2 oder 3, Substituenten unabhängig voneinander ausgewählt aus der. Gruppe bestehend aus F, Cl, Br, I, -CN, -CF₃, -OH, -NH₂, -O-CF₃, -SH, -O-C₁₋₅-Alkyl, -O-Phenyl, -O-CH₂-Phenyl, -(CH₂)-O-C₁₋₅-Alkyl, -C₁₋₅-Alkyl, -C₂₋₅-Alkenyl, -C₂₋₅-Alkinyl, -C(=O)-O-C₁₋₅-Alkyl, -C(=O)-CF₃, Oxo (=O), Thioxo (=S), -N(C₁₋₅-Alkyl)₂, -NO₂, -S-CF₃ und Phenyl substituiert sein, wobei die vorstehend genannten C₁₋₅-Alkyl-Reste jeweils linear oder verzweigt sein können und die Phenyl-Reste jeweils unsubstituiert oder mit 1, 2, 3, 4 oder 5, bevorzugt mit 1, 2, 3 oder 4, Substituenten unabhängig voneinander ausgewählt aus der Gruppe bestehend aus F, Cl, Br, I, -CN, -CF₃, -OH, -NH₂, -O-CF₃, -SH, -O-C₁₋₅-Alkyl und -C₁₋₅-Alkyl substituiert sein können.

Der Begriff "Aryl" bedeutet im Sinne der vorliegenden Erfindungen einen mono- oder polyzyklischen, bevorzugt einen mono- oder bizyklischen, aromatischen Kohlenwasserstoff-Rest mit bevorzugt 6, 10 oder 14 C-Atomen. Ein Aryl-Rest kann unsubstituiert oder einfach substituiert oder mehrfach gleich oder verschieden substituiert sein. Als geeignete Aryl-Reste seien beispielsweise Phenyl-, 1-Naphthyl, 2-Naphthyl und Anthracenyl genannt. Besonders bevorzugt ist ein Aryl-Rest ein Phenyl-Rest.

Der Begriff "Arylen" bedeutet im Sinne der vorliegenden Erfindungen einen mono- oder bizyklischen, aromatischen Kohlenwasserstoff-Rest mit bevorzugt 6 oder 10 C-Atomen, der zweiwertig ist, d. h. der Rest besitzt zwei offene Valenzen bzw. Bindungsstellen im Grundgerüst der allgemeinen Formel I. Ein Aryl-Rest kann unsubstituiert oder einfach substituiert oder mehrfach gleich oder verschieden substituiert sein. Ein Arylen-Rest kann unsubstituiert oder einfach substituiert oder mehrfach gleich oder verschieden substituiert sein. Ein bevorzugter Arylen-Rest ist Phenylen.

Die Begriffe "-(Alkylen)-(Arylen)-" und "-(Heteroalkylen)-(Arylen)-" bedeuten im Sinne der vorliegenden Erfindung zweiwertige bzw. divalente Kohlenwasserstoffreste, in denen sich eine offene Valenz am Alkyl- bzw- Heteroalkyl-Rest und die andere offene Valenz am Aryl-Rest befindet. Ein -(Alkylen)-(Arylen)- bzw. -(Heteroalkylen)-(Arylen)- kann unsubstituiert oder einfach substituiert oder mehrfach gleich oder verschieden substituiert sein.

Als geeignete -(Alkylen)-(Arylen)-Reste, die unsubstituiert oder einfach oder mehrfach substituiert sein können, seien beispielsweise -(CH₂)-Phenylen und -(CH₂)-(CH₂)-Phenylen genannt.

Sofern einer oder mehrere der Substituenten für einen Aryl-, Arylen-, -(Alkylen)-(Arylen)- oder -(Heteroalkylen)-(Arylen)- stehen oder einen Aryl-, Arylen-, -(Alkylen (Arylen)- oder -(Heteroalkylen)-(Arylen)- aufweisen, der einfach oder mehrfach substituiert ist, kann dieser bevorzugt mit ggf. 1, 2, 3, 4 oder 5, besonders bevorzugt mit ggf. 1, 2 oder 3, Substituenten unabhängig voneinander ausgewählt aus der Gruppe bestehend aus F, Cl, Br, I, -CN, -NO₂, -OH, -SH, -NH₂, -C(=O)-OH, -C₁₋₅-Alkyl, -(CH₂)-O-C₁₋₅-Alkyl, -C₂₋₅-Alkenyl, -O-C₁₋₅-Alkyl, -O-Phenyl, -O-CH₂-Phenyl, -CF₃, -CHF₂, -CH₂F, -O-CF₃, -O-CHF₂, -O-CH₂F und -C(=O)-C₁₋₅-Alkyl substituiert sein, wobei die vorstehend genannten C₁₋₅-Alkyl-Reste jeweils linear oder verzweigt sein können und die zyklischen Substituenten bzw. die zyklischen Reste dieser Substituenten selbst mit ggf. 1, 2, 3, 4 oder 5, bevorzugt mit ggf. 1, 2, 3 oder 4, Substituenten unabhängig voneinander ausgewählt aus der Gruppe bestehend aus F, Cl, Br, I, -CN, -NO₂, -OH, -SH, -NH₂, -C₁₋₅-Alkyl, -O-C₁₋₅-Alkyl, -CF₃, -CHF₂, -CH₂F, -O-CF₃, -O-CHF₂ und -O-CH₂F substituiert sein können.

Besonders bevorzugt können die Substituenten, jeweils unabhängig voneinander ausgewählt werden aus der Gruppe bestehend aus F, Cl, Br, I, -CN, -NO₂, Methyl, Ethyl, n-Propyl, Isopropyl, n-Butyl, Isobutyl, 2-Butyl, tert-Butyl, -O-CH₃, -O-C₂H₅, -O-C₃H₇, -O-C(CH₃)₃, -CF₃, -CHF₂ und -CH₂F.

Der Begriff "Alkylen" umfasst im Sinne der vorliegenden Erfindung zweiwertige, acyclische gesättigte Kohlenwasserstoffketten, die Kohlenwasserstoff-Rest mit Verbindung der allgemeinen Formel I bzw. mit einem anderen Substituenten verbinden. Alkylen-Ketten können verzweigt oder geradkettig sowie unsubstituiert oder wenigstens einfach substituiert sein mit wie im Fall von C₁₋₁₂-Alkylen 1 bis 12 (d.h. 1, 2, 3, 4, 5, 6, 7, 8, 9, 10, 11 oder 12) C-Atomen, mit wie im Fall von C₁₋₆-Alkylen 1 bis 6 (d. h. 1, 2, 3, 4, 5 oder 6) Atomen bzw. mit wie im Fall von C₁₋₃-Alkylen 1 bis 3 (d. h. 1, 2 oder 3) C-Atomen. Beispielhaft seien C₁₋₅-Alkylen-Gruppen wie -(CH₂)-, -(CH₂)₂-, -C(H)(CH₃)-, -(CH₂)₃-, -(CH₂)₄-, -(CH₂)₅-, -C(CH₃)₂-, -C(H)(CH₃), -C(H)(C(H)(CH₃)₂- und C(C₂H₅)(H)- genannt.

Der Begriff "Alkenylen" umfasst im Sinne der vorliegenden Erfindung azyklische ungesättigte Kohlenwasserstoffketten, die Kohlenwasserstoff-Rest mit Verbindung der allgemeinen Formel bzw. mit einem anderen Substituenten verbinden.

Alkenylen-Ketten weisen wenigstens eine Doppelbindung, bevorzugt 1, 2 oder 3 Doppelbindungen, auf und können verzweigt oder geradkettig sowie unsubstituiert oder wenigstens einfach substituiert sein mit wie im Fall von C₂₋₁₂-Alkenylen 2 bis 12 (d.h. 2, 3, 4, 5, 6, 7, 8, 9, 10, 11 oder 12) C-Atomen, mit wie im Fall von C₂₋₆-Alkenylen 2 bis 6 (d. h. 2, 3, 4, 5 oder 6) C-Atomen bzw. mit wie im Fall von C₂₋₃-Alkenylen 2 bis 3 (d. h. 2 oder 3) C-Atomen. Beispielhaft seien C₂₋₃-Alkenylen-Gruppen wie -CH=CH- und -CH₂-CH=CH- genannt.

Der Begriff "Heteroalkylen" bezeichnet eine wie vorstehend beschriebenen AlkylenKette, in dem ein oder mehrere C-Atome jeweils durch ein Heteroatom unabhängig voneinander ausgewählt aus der Gruppe bestehend aus Sauerstoff, Schwefel und Stickstoff (NH) ersetzt wurden. Heteroalkylen-Gruppen können bevorzugt 1, 2 oder 3 Heteroatom(e), besonders bevorzugt ein Heteroatom, ausgewählt aus der Gruppe bestehend aus Sauerstoff, Schwefel und Stickstoff (NH) als Kettenglied(er) aufweisen. Besonders bevorzugt ist das Heteroatom ein Sauerstoff oder Schwefelatom. Ganz besonders bevorzugt ist das Heteroatom ein Sauerstoffatom. Heteroalkylen-Gruppen können bevorzugt 2- bis 12-gliedrig, besonders bevorzugt 2- bis 6-gliedrig, ganz besonders bevorzugt 2- oder 3-gliedrig, sein.

Sofern einer oder mehrere der Substituenten für eine Alkylen-, Alkenylen- oder Heteroalkylen-Gruppe stehen oder eine solche Gruppe aufweisen, die einfach oder mehrfach substituiert ist, kann diese bevorzugt mit ggf. 1, 2, 3, 4 oder 5, besonders bevorzugt mit ggf. 1, 2 oder 3, Substituenten unabhängig voneinander ausgewählt aus der Gruppe bestehend aus F, Cl, Br, I, -NO₂ und -CN substituiert sein.

Bevorzugt liegt in der Beschichtungszusammensetzung 12 bis 20 Gew.-% Polyisocyanat und 8 bis 18 Gew.-% Polyol und 8 bis 25-% Ketimin oder Aldimine oder Mischungen hieraus vor.

Bevorzugt enthält die erfindungsgemäße Beschichtungszusammensetzung 30 bis 60 Gew.-%, bevorzugt 40 bis 60 Gew.-% eines oder mehrerer Füllstoffe, farbgebende Pigmente und Korrosionsschutzpigmente.

Vorzugsweise ist der Füllstoff bzw. die Korrosionsschutzpigmentierung nicht chromathaltig.

Bevorzugt enthält die erfindungsgemäße Beschichtungszusammensetzung Calciumhydrogenphosphat in einem Massenanteil von 1 bis 10 Gew.-%, besonders bevorzugt 1- 5 Gew.-%.

Bevorzugt enthält die erfindungsgemäße Beschichtungszusammensetzung 0,1 bis 3 Gew.-% mindestens einer Silanverbindung der allgemeinen Formel (I).

Bevorzugt sind Silanverbindungen der allgemeinen Formel (I), worin
- R¹: für H; einen Alkyl-Rest ausgewählt aus der Gruppe bestehend aus Methyl, Ethyl, n-Propyl, Isopropyl, n-Butyl, 2-Butyl, Isobutyl, tert-Butyl, n-Pentyl und n-Hexyl, der unsubstituiert oder mit ggf. 1, 2, 3, 4 oder 5 Substituenten unabhängig voneinander ausgewählt aus der Gruppe bestehend aus F, Cl, Br, I, -NO₂ und -CN substituiert ist; oder für einen Phenyl- oder Benzyl-Rest steht, der unsubstituiert oder mit 1, 2, 3, 4 oder 5 Substituenten unabhängig voneinander ausgewählt aus der Gruppe bestehend aus F, Cl, Br, I, -CN, -NO₂, Methyl, Ethyl, n-Propyl, Isopropyl, n-Butyl, Isobutyl, 2-Butyl, tert-Butyl, -O-CH₃, -O-C₂H₅, -O-C₃H₇, -O-C(CH₃)₃, -CF₃, -CHF₂ und -CH₂F substituiert ist;
- R²: für einen C₁₋₅-Akenylen-Rest steht, der unsubstituiert oder ggf. mit 1, 2 oder 3 Substituenten unabhängig voneinander ausgewählt aus der Gruppe bestehend aus F, Cl, Br, I, -NO₂ und -CN substituiert ist;
- R³: für -O-R⁶; -C(=O)-R⁷; H; einen Alkyl-Rest ausgewählt aus der Gruppe bestehend aus Methyl, Ethyl, n-Propyl, Isopropyl, n-Butyl, 2-Butyl, Isobutyl, tert-Butyl, n-Pentyl und n-Hexyl steht, der unsubstituiert oder mit ggf. 1, 2, 3, 4 oder 5 Substituenten unabhängig voneinander ausgewählt aus der Gruppe bestehend aus F, Cl, Br, I, -NO₂ und -CN substituiert ist;
- R⁴: für -O-R⁸; -C(=O)-R⁹; H; einen Alkyl-Rest ausgewählt aus der Gruppe bestehend aus Methyl, Ethyl, n-Propyl, Isopropyl, n-Butyl, 2-Butyl, Isobutyl, tert-Butyl, n-Pentyl und n-Hexyl steht, der unsubstituiert oder mit ggf. 1, 2, 3, 4 oder 5 Substituenten unabhängig voneinander ausgewählt aus der Gruppe bestehend aus F, Cl, Br, I, -NO₂ und -CN substituiert ist;
- R⁵: für -O-R¹⁰; -C(=O)-R¹¹; H; einen Alkyl-Rest ausgewählt aus der Gruppe bestehend aus Methyl, Ethyl, n-Propyl, Isopropyl, n-Butyl, 2-Butyl, Isobutyl, tert-Butyl, n-Pentyl und n-Hexyl steht, der unsubstituiert oder mit ggf. 1, 2, 3, 4 oder 5 Substituenten unabhängig voneinander ausgewählt aus der Gruppe bestehend aus F, Cl, Br, I, -NO₂ und -CN substituiert ist;
und
R⁶, R⁷, R⁸, R⁹, R¹⁰ und R¹¹, unabhängig voneinander, jeweils für H oder für einen Alkyl-Rest ausgewählt aus der Gruppe bestehend aus Methyl, Ethyl, n-Propyl, Isopropyl, n-Butyl, 2-Butyl, Isobutyl, tert-Butyl, n-Pentyl und n-Hexyl stehen, der unsubstituiert oder mit ggf. 1, 2, 3, 4 oder 5 Substituenten unabhängig voneinander ausgewählt aus der Gruppe bestehend aus F, Cl, Br, I, -NO₂ und -CN substituiert ist.

Besonders bevorzugt sind Silanverbindungen der allgemeinen Formel (I), worin
- R¹: für H; einen Alkyl-Rest ausgewählt aus der Gruppe bestehend aus Methyl, Ethyl, n-Propyl, Isopropyl, n-Butyl, 2-Butyl, Isobutyl, tert-Butyl, n-Pentyl und n-Hexyl, der unsubstituiert ist; oder für einen Phenyl-Rest steht, der unsubstituiert oder mit 1, 2, 3, 4 oder 5 Substituenten unabhängig voneinander ausgewählt aus der Gruppe bestehend aus F, Cl, Br und Methyl substituiert ist;
- R²: für -(CH₂)-, -(CH₂)₂-, -(CH₂)₃-, -(CH₂)₄- oder -(CH₂)₅- steht;
- R³: für -O-R⁶ oder H steht;
- R⁴: für -O-R⁸ oder H steht;
- R⁵: für -O-R¹⁰ oder H steht;
und
- R⁶, R⁸ und R¹⁰,: unabhängig voneinander, jeweils für H oder für einen Alkyl-Rest ausgewählt aus der Gruppe bestehend aus Methyl, Ethyl, n-Propyl, Isopropyl, n-Butyl, 2-Butyl, Isobutyl, tert-Butyl, n-Pentyl und n-Hexyl stehen, der unsubstituiert ist.

Ganz besonders bevorzugt sind Silanverbindungen der allgemeinen Formel (I), worin
- R¹: für H; oder für einen Phenyl-Rest steht, der unsubstituiert oder mit 1, 2, 3, 4 oder 5 Substituenten unabhängig voneinander ausgewählt aus der Gruppe bestehend aus F, Cl, Br und Methyl substituiert ist;
- R²: für -(CH₂)₃- steht;
- R³: für -O-R⁶ steht;
- R⁴: für -O-R⁸ steht;
- R⁵: für -O-R¹⁰ steht;
und
R⁶, R⁸ und R¹⁰, unabhängig voneinander, jeweils für einen Methyl- oder Ethyl-Rest stehen.

Noch weiter bevorzugt sind Silanverbindungen der allgemeinen Formel (I) ausgewählt aus der Gruppe bestehend aus 3-Aminopropyltrimethoxysilan z.B. kommerziell erhältlich als Geniosil GF 96 von der Fa. Wackerchemie, 4-Amino-3,3-dimethylbutyltrimethoxysilan kommerziell erhältlich als Silquest A-1637 von der Fa. Momentive und N-Phenyl-γ-aminopropyltrimethoxysilan z.B kommerziell erhältlich als Y-15085 (Silquest Y-9669) von der Fa. Momentive.

Vorzugsweise weist das Calciumhydrogenphosphat eine Partikelgröße von 1,0 bis 10,0 µm, bevorzugt 2,5 - 4,0 µm (gemessen mit einem Coulter Multisizer II) auf. Bei einer Verwendung von Partikeln dieser Größe resultieren besonders glatte Oberflächen.

Bevorzugt handelt es sich bei der Beschichtungzusammensetzung um eine Kombination aus mindestens einer isocyanathaltigen Verbindung, mindestens einer hydroxylgruppenhaltigen Verbindung, mindestens einem Ketimin, einem oder mehrerer Füllstoffe, farbgebender Pigmente und Korrosionsschutzpigmente, wobei ein Füllstoff Calciumhydrogenphosphat ist, mindestens einem Lösungsmittel und mindestens einem Silan der vorstehend genannten allgemeinen Formel I. Die Verwendung von Ketiminen statt Aldiminen führt zu deutlich besseren Wassersprühergebnissen, die z.B. durch bessere Blasengradwerte für die Verwendung von Ketiminen festgestellt werden können.

Besonders bevorzugt enthält die Beschichtungszusammensetzung 10 bis 20 Gew.-% mindestens einer isocyanathaltigen Verbindung, 5 bis 20 Gew.-% mindestens einer hydroxylgruppenhaltigen Verbindung, 5 bis 25 Gew.-% mindestens eines Ketimins, und 30 bis 60 Gew.-% eines oder mehrerer Füllstoffe, farbgebender Pigmente und Korrosionsschutzpigmente, wobei als der bzw. ein Füllstoff Calciumhydrogenphosphat in einem Massenanteil von 0,1 bis 20 Gew.-% enthalten ist, und mindestens eine Verbindung der vorstehend genannten Formel (I) in einem Massenanteil von 0,1 bis 5 Gew.%, jeweils bezogen auf das Gesamtgewicht der Beschichtungszusammensetzung.

Ganz besonders bevorzugt enthält die Beschichtungszusammensetzung 12 bis 20 Gew.-% mindestens einer isocyanathaltigen Verbindung, 12 bis 20 Gew.-% mindestens einer hydroxylgruppenhaltigen Verbindung, 8 bis 18 Gew.-% mindestens eines Ketimins, und 8 bis 25 Gew.-% eines oder mehrerer Füllstoffe, farbgebender Pigmente und Korrosionsschutzpigmente, wobei als der bzw. ein Füllstoff Calciumhydrogenphosphat in einem Massenanteil von 1 bis 10 Gew.-% enthalten ist, mindestens ein Lösungsmittel, und mindestens eine Verbindung der vorstehend genannten Formel (I) in einem Massenanteil von 0,1 bis 3 Gew.-%, jeweils bezogen auf das Gesamtgewicht der Beschichtungszusammensetzung.

Die als Grundkörper für die erfindungsgemäß bevorzugt eingesetzten isocyanatgruppenhaltigen Verbindungen dienenden Polyisocyanate sind bevorzugt an sich bekannte substituierte oder unsubstituierte aromatische, aliphatische, cycloaliphatische und/oder heterozyklische Polyisocyanate.

Vorzugsweise weist das Polyisocyanat bzw. die isocyanatgruppenhaltige Verbindung eine mittlere NCO-Funktionalität von 2 bis 6 auf.

Beispiele für bevorzugte Polyisocyanate sind: 2,4-Toluoldiisocyanat, 2,6-Toluoldiisocyanat, Diphenylmethan-4,4'-diisocyanat, Diphenylmethan-2,4'-diisocyanat, p-Phenylendiisocyanat, Biphenyldiisocyanate, 3,3'-Dimethyl-4,4'-diphenyldiisocyanat, Tetramethylen-1,4-diisocyanat, Hexamethylen-1,6-diisocyanat, 2,2,4-Trimethylhexan-1,6-diisocyanat, Isophorondiisocyanat, Ethylendiisocyanat, 1,12-Dodecandiisocyanat, Cyclobutan-1,3-diisocyanat, Cyclohexan-1,3-diisocyanat, Cyclohexan-1,4-diisocyanat, Methylcyclohexyldiisocyanate, Hexahydrotoluol-2,4-diisocyanat, Hexahydrotoluol-2,6-diisocyanat, Hexahydrophenylen-1,3-diisocyanat, Hexahydrophenylen-1,4-diisocyanat, Perhydrodiphenylmethan-2,4'-diisocyanat, 4,4'-Methylendicyclohexyldiisocyanat (z.B. Desmodur ® W der Fa. Bayer AG), Tetramethylxylyldiisocyanate (z.B. TMXDI ® der Fa. American Cyanamid) und Mischungen der vorgenannten Polyisocyanate. Weiterhin bevorzugte Polyisocyanate sind die durch Oligomerisierung, Trimerisierung, Dimerisierung, Urethan-, Biuret- oder Allophanatbildung von einem Poylisocyanat abgeleiteten Polyisocyanate oder eine Mischung aus diesen. Die letztgenannten Polyisocyanate weisen eine geringe Viskosität auf.

Besonders bevorzugte Polyisocyanate sind Hexamethylen-1,6-diisocyanat Isophorondiisocyanat und 4,4'-Methylendicyclohexyldiisocyanat, deren Biuret-Dimere und/oder Isocyanurat-Trimere und oder Allophanate und oder Urethdione bzw. Mischungen aus diesen Grundverbindungen

Ganz besonders bevorzugtes Polyisocyanate sind asymmetrische Trimere von Hexamethylen-1,6-diisocyanat. Diese Polyisocyanate sind besonders niedrigviskos.

Als hydroxylgruppenhaltige Verbindung werden vorzugsweise ein niedermolekulares Polyol, ein oligomeres Polyol, ein polymeres Polyol oder eine Mischung dieser Polyole eingesetzt.

Die hydroxylgruppenhaltigen Verbindungen weisen bevorzugt Viskositäten < 4500 m•Pa•s bei 23°C gemessen nach DIN EN ISO 3219/A.3 und Glasübergangstemperaturen von < 0°C gemessen über DSC auf.

Die Hydroxylzahl der Polyole liegt bei 5 bis 350, vorzugsweise bei 8 bis 200 mg KOH/g Substanz.

Die Hydroxylzahl (OH-Zahl) gibt an, wie viel mg Kaliumhydroxid der Essigsäure-Menge äquivalent sind, die von 1 g Substanz bei der Acetylierung gebunden wird. Die Probe wird bei der Bestimmung mit Essigsäureanhydrid-Pyridin gekocht und die entstehende Säure mit Kaliumhydroxidlösung titriert (DIN 53240-2). Die Säurezahl gibt hierbei die Anzahl der mg Kaliumhydroxid an, die zur Neutralisation von 1 g der jeweiligen hydroxylgruppenhaltigen Verbindung verbraucht wird (DIN EN ISO 2114).

Vorzugsweise liegen massenmittlere Molekulargewichte Mw der Polyole zwischen 650 und 20.000 Dalton, besonders bevorzugt zwischen 750 und 10.000 Dalton, jeweils gemessen mittels Gelpermeationschromatographie (GPC) gegen einen Polystyrolstandard.

Die hydroxylgruppenhaltige Verbindung ist vorzugsweise ein Polyol mit Ether- und/oder Estergruppen. Bevorzugt ist dieses Polyol verzweigt.

Ansonsten geeignete Rohstoffe zur Herstellung dieser Polyesterpolyole im Weiteren sind (z. B. Ullmanns Enzyklopädie der technischen Chemie, 4. Auflage, Band 19, S. 62-65) sind difunktionelle Alkohole wie Ethylenglykol, 1,2- und 1,3-Propylenglykol, 1,3-, 1,4-, 2,3-Butandiol, 1,6-Hexandiol, Neopentylglykol, Trimethylhexandiol, Triethylenglykol, Tetraethylenglykol, hydrierte Bisphenole, Trimethylpentandiol, Diethylendiglykol, Dipropylendiglykol, 1,4-Cyclohexan-diol, 1,4-Cyclohexandimethanol und difunktionelle Carbonsäuren bzw. deren Anhydride wie Adipinsäure, Phthalsäure(anhydrid), Isophthalsäure, Maleinsäure(an-hydrid), Terephthalsäure, Tetrahydrophthalsäure(anhydrid), Hexahydrophthalsäure(anhydrid), Bernsteinsäure(anhydrid), Fumarsäure, Azelainsäure, Dimerfettsäuren. Ebenfalls zur Mitverwendung in untergeordneten Mengen geeignete Polyesterrohstoffe sind Monocarbonsäuren wie Benzoesäure, 2-Ethylhexansäure, Ölsäure, Sojaölfettsäure, Stearinfettsäure, Erdnussölfettsäure, Leinölfettsäure, Nonansäure, Cyclohexanmonocarbonsäure, Isononansäure, Sorbinsäure, Konjuenfettsäure, höherfunktionelle Carbonsäuren oder Alkohole wie Trimellithsäure(an-hydrid), Butantetracarbonsäure, Trimerfettsäuren, Trimethylolpropan, Glycerin, Pentaerythrit, Rizinusöl, Dipentaerythrit und andere nicht namentlich genannte Polyesterrohstoffe.

Dabei beträgt der Gewichtsanteil der hydroxylgruppenhaltigen Fettsäure bezogen auf die Hydroxylgehalte der hydroxylgruppenhaltigen Verbindungen bevorzugt mehr als 60, weiter bevorzugt mehr als 80 und besonders bevorzugt mehr als 120 %.

Ebenfalls geeignet sind Polyesterdiole auf Lactonbasis, wobei es sich um Homo- oder Mischpolymerisate von Lactonen, bevorzugt um endständige Hydroxylgruppen aufweisende Anlagerungsprodukte von Lactonen wie z. B. epsilon-Caprolacton oder gamma-Butyrolacton an difunktionelle Startermoleküle handelt. Geeignete Startermoleküle können die oben genannten Diole, aber auch niedermolekulare Polyester- oder Polyetherdiole sein. Anstelle der Polymerisate von Lactonen können auch die entsprechenden Hydroxycarbonsäuren eingesetzt werden.

Ebenfalls geeignete Polyolkomponenten sind Polyetherpolyole. Sie sind z. B. durch Polymerisation von Ethylenoxid, Propylenoxid und/oder Tetrahydrofuran mit sich selbst, z. B. in Gegenwart von BF₃ oder basischen Katalysatoren oder aber durch Anlagerung dieser Verbindungen gegebenenfalls auch im Gemisch oder nacheinander, an Starterkomponenten mit reaktionsfähigen Wasserstoffatomen, wie Alkohole, Amine, Aminoalkohole oder Wasser erhältlich.

Entsprechende Polyetherpolyole, die in der beanspruchten Erfindung verwendet werden können, sind auch in Fett Wissenschaft Technologie/Fat Science Technology, 89, Seiten 147 -151; J. Polym. Sci., Part B: Polym. Phys., 2003, 42, 809-819 und WO 97/0069363 beschrieben.

Bevorzugte Beispiele für kommerzielle hydroxylgruppenhaltige Verbindungen sind Desmophen 1150, Sovermol 818, Sovermol 805, Sovermol 750, Caspol 5009, Caspol 1938 und Caspol 1842.

Besonders bevorzugt handelt es sich bei dem verwendeten Aldimin bzw. Ketimin um das Reaktionsprodukt der Umsetzung von Isophorondiamin mit einem entsprechenden Aldehyd bzw. Keton. Diese Reaktionsprodukte weisen eine geringe Viskosität auf und bieten sich somit für den Einsatz in den erfindungsgemäßen Beschichtungszusammensetzungen an.

Grundsätzlich können Aldimine und Ketimine gemäß der Beschreibung in March, Advanced Organic Chemistry, Reactions, Mechanisms and Structure Third ed. S. 797, John Wiley & Sons hergestellt werden. Eine weitere Beschreibung findet sich in EP 0686654

Bevorzugt umfassen die erfindungsgemäßen Beschichtungszusammensetzungen ≤540 g/l leichtflüchtige organische Verbindungen (VOC). Besonders bevorzugt umfassen die Beschichtungszusammensetzungen ≤ 280 g/l VOC. Aufgrund ihrer geringen VOC-Gehalte führen sie nur zu einem geringen Ausmaß zu einer Umweltbeeinträchtigung.

Als Lösungsmittel für die erfindungsgemäßen Beschichtungsmittel sind insbesondere solche geeignet, die im Beschichtungsmittel chemisch inert gegenüber hydroxylgruppenhaltigen Verbindungen und isocyanatgruppenhaltigen Verbindungen sind und die auch bei der Härtung des Beschichtungsmittels nicht mit hydroxylgruppenhaltigen Verbindungen und isocyanatgruppenhaltigen Verbindungen reagieren. Beispiele für solche Lösungsmittel sind aliphatische und/oder aromatische Kohlenwasserstoffe wie Toluol, Xylol, Solventnaphtha, Solvesso 100 oder Hydrosol^{®} (Fa. ARAL), Ketone, wie Aceton, Methylethylketon oder Methylamylketon, Ester, wie Ethylacetat, Butylacetat, Pentylacetat oder Ethylethoxypropionat, Ether oder Mischungen aus den vorgenannten Lösungsmitteln. Besonders bevorzugt ist als Lösungsmittel Butylacetat. Bevorzugt weisen die aprotischen Lösungsmittel oder Lösungsmittelgemische einen Wassergehalt von maximal 1 Gew.-%, besonders bevorzugt maximal 0,5 Gew.%, bezogen auf das Lösungsmittel auf.

Darüber hinaus kann das erfindungsgemäße Beschichtungsmittel mindestens ein übliches und bekanntes Lackadditiv in wirksamen Mengen, d.h. in Mengen vorzugsweise bis zu 30 Gew.-%, besonders bevorzugt bis zu 25 Gew.-% und ganz besonders bevorzugt bis zu 20 Gew.-%, jeweils bezogen auf das Gesamtgewicht der Beschichtungszusammensetzung, enthalten.

Beispiele geeigneter Lackadditive sind:
- insbesondere UV-Absorber;
- insbesondere Lichtschutzmittel wie HALS-Verbindungen, Benztriazole oder Oxalanilide;
- Radikalfänger;
- Slipadditive;
- Polymerisationsinhibitoren;
- Entschäumer;
- Reaktiwerdünner, wie sie aus dem Stand der Technik allgemein bekannt sind, welche bevorzugt inert gegenüber den -Si(OR)₃-Gruppen sind.
- Netzmittel wie Siloxane, fluorhaltige Verbindungen, Carbonsäurehalbester, Phosphorsäureester, Polyacrylsäuren und deren Copolymere oder Polyurethane;
- Haftvermittler wie Tricyclodecandimethanol;
- Verlaufsmittel;
- Dispergiermittel;
- Antiabseizmittel;
- Pigmentstabilisatoren;
- Filmbildende Hilfsmittel wie Cellulose-Derivate;
- Füllstoffe wie beispielsweise Nanopartikel auf der Basis von Siliziumdioxid, Aluminiumoxid oder Zirkoniumoxid; ergänzend wird noch auf das Römpp Lexikon "Lacke und Druckfarbe" Georg Thieme Verlag, Stuttgart, 1998, Seiten 250 bis 252, verwiesen;
- Füllstoffe wie beispielsweise Verstärkungsfüllstoffe, wie z. B. pyrogene Kieselsäure, präzipitierte Kieselsäure und Calciumcarbonat;
- Füllstoffe, wie beispielsweise Zinkphosphat;
- Rheologiesteuernde Additiv wie die aus den Patentschriften WO 94/22968, EP-A-0 276 501, EP-A-0 249 201 oder WO 97/12945 bekannten Additive; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymer und ihre Derivate oder hydrophob modifizierte ethoxylierte Urethane oder Polyacrylate;
- und/oder Flammschutzmittel.

Die erfindungsgemäße Beschichtungszusammensetzung enthält farbgebende Pigmente und Korrosionsschutzpigmente. Die dafür eingesetzten Pigmente sind dem Fachmann bekannt. Farbgebende Pigmente sind beispielsweise Weißpigmente wie Titandioxid, Zinkoxid, Zinksulfid, Lithopone und Bariumsulfat, und Schwarzpigmente wie Ruß, anorganische Spinelle und organische Schwarzpigmente. Farbgebende Pigmente sind beispielsweise ebenso Buntpigmente wie anorganische Buntpigmente (Eisenoxid, Bleimolybdat, Wismutvanadat, Cyaneisenblau, Ultramarin) und organische Buntpigmente

(Azopigmente, Metallkernpigmente, Triphenylmethanpigmente, Indigoide Pigmente, Isoindolline, Isoindolinone, Anthrachinone, Chinacridone und Perylen).

Gegenstand der Erfindung ist auch ein Verfahren zur Herstellung einer erfindungsgemäßen Zusammensetzung, bei dem eine Zusammensetzung umfassend die mindestens eine hydroxylgruppenhaltige Verbindung mit einer Zusammensetzung umfassend mindestens eine isocyanatgruppenhaltige Verbindung vermischt wird. Weiter bevorzugt wird bei dieser Vermischung eine weitere, das mindestens eine Aldimin und/oder Ketimin umfassende Zusammensetzung beigemischt. Die die mindestens eine hydroxylgruppenhaltige Verbindung umfassende Zusammensetzung enthält dabei vorzugsweise auch das bzw. die Additive. Bei dieser Vermischung wird mindestens eine Silanverbindung der allgemeinen Formel (I) beigemischt.

Bevorzugt wird die Silankomponente gemäß der Formel (I) der Füllstoff- und Pigment-haltigen Komponente oder der Reaktivverdünner-haltigen Komponente zugegeben. Bevorzugt geschieht dies während der Lackkomplettierung unter Rühren oder einer Mehr-Komponentenmischanlage.

Die Vermischung erfolgt bevorzugt bei Temperaturen zwischen 10 und 30 °C, besonders bevorzugt bei Temperaturen zwischen 15 und 25°C.

Gegenstand der Erfindung ist weiterhin die Verwendung der erfindungsgemäßen Beschichtungszusammensetzungen als Lack im Autoreparaturbereich, im Fahrzeug-, Nutzfahrzeug- (auch Mulden, Chassis) und Landmaschinen- und Eisenbahnenbereich. Bevorzugt werden die erfindungsgemäßen Beschichtungszusammensetzungen als Grundierung (Primer) mit und ohne chemische Vorbehandlung wie Eisen oder Zinkphosphatierung, mit und ohne mechanische Vorbehandlung wie Sandstrahlen, Schleifen oder Ähnliches verwendet. Die erfindungsgemäßen Beschichtungszusammensetzungen können dabei sowohl als Grundierung unter einer Basislack- und einer Klarlackschicht als auch unter einem einschichtigen Decklack eingesetzt werden. Weiter bevorzugt ist dabei die Verwendung der erfindungsgemäßen Beschichtungszusammensetzungen als Grundierung auf Aluminium, Stahl, Kunststoffen und Multistoffsubstraten, d.h. Substraten, die aus unterschiedlichen Stoffen bestehen. Beispiele für Multistoffsubstrate sind insbesondere im Autoreparaturbereich Altlackierungen mit Durchschliffstellen. Hier treffen nicht definierte metallische Substrate (Durchschliffstelle) auf nicht definierte polymere Substrate (Altlackierung z.B. aus Elektrotauchlack, Primer, Basislack und Klarlack). Besonders bevorzugt ist die Verwendung auf Aluminium oder einem Multistoff-Substrat.

Gegenstand der Erfindung ist ebenfalls ein beschichtetes Substrat, herstellbar durch Beschichten eines Substrats mit einer erfindungsgemäßen Beschichtungszusammensetzung und Härten der Beschichtung. Das beschichtete Substrat ist dabei vorzugsweise mit der Beschichtungszusammensetzung als Grundierung unter einer Basislack- und einer Klarlackschicht oder unter einem einschichtigen Decklack beschichtet. Bevorzugt handelt es sich bei dem Substrat um Aluminium, Stahl oder Kunststoff oder um ein Multistoff-Substrat. Besonders bevorzugt handelt es sich bei dem Substrat um Aluminium oder ein Multistoff-Substrat.

Die Erfindung wird im Folgenden anhand von Beispielen veranschaulicht.

### Beispiele

Es werden die folgenden drei Zusammensetzungen mit den angegebenen Werten für die Mengenangaben vorbereitet:

| | | |
|---|---|---|
| **1.** | **237,3 g** | Verzw. Polyalkohol mit Ether- und Estergruppen (Desmophen^{®} 1150), |
| | **46,0 g** | Calciumhydrogenphosphat, Partikelgröße 2,5 - 4,0 µm (Heucophos^{®} |
| | | CHP) |
| | **229,6 g** | Zinkphosphat (Heucophos® ZPA) |
| | **205,3 g** | Butylacetat 98-100% |
| | **15,3 g** | Disperbyk 111 |
| | **6,1 g** | Bentone 38 |
| | **6,1 g** | Aerosil R 972 |
| | **4,6 g** | Bayferrox 3910 |
| | **1,5** | Flammenruß 101 |
| | **91,9 g** | Luzenac 10 MO |
| | **61,2 g** | Silitin N 85 |
| | **206,7 g** | Blanc Fixe N |
| | **290,9 g** | Titan Rutil Tiona 595 |
| | **91,9 g** | Zeeospheres G 600 |
| **2.** | **1200 g** | Ketimin (Desmophen^{®} 2965) |
| | **291 g** | Butylacetat 98-100% |
| | **9,0 g** | Benzoesäure D |
| **3.** | **1275 g** | Asymmetrisches HMDI-Trimer (Desmodur^{®} XP 2410) |
| | **225 g** | Butylacetat 98-100% |

Aus den Komponente 1, 2 und 3 wird durch Mischen von 200 g Komponente 1, 47,4 g Komponente 3 und 60,1 g der Komponente 2 ein Beschichtungsmittel hergestellt, dem jeweils 2,1 g der Silane 1 bis 5 zugesetzt wurden. Bevorzug wir hierbei das Silan zur Komponente 1 vor der Komplettierung zugegeben.

| | | | |
|---|---|---|---|
| Beispiel 1: | Silan 1 | Geniosil GF 96® | 3-Aminopropyltrimethoxysilan |
| Beispiel 2: | Silan 2 | Silquest Y-9669® | N-Phenyl-γ-aminopropyl- |
| | | | trimethoxysilan |
| Vergleichsbeispiel 3: | | | |
| | Silan 3 | Geniosil GF 80® | 3-Glycidoxypropyl- |
| | | | Trimethoxysilan |
| Vergleichsbeispiel 4: | | | |
| | Silan 4 | A-Link 597® | (Tris-(3-(trimethoxysilyl)propyl)- |
| | | | Isocyanurat |
| Vergleichsbeispiel 5: | | | |
| | Silan 5 | | Vinyltrimethoxysilan |

Die resultierende Beschichtungszusammensetzung wird als Grundierfüller auf Stahl (CRS-Tafeln für Karosserieblech Nr. 18 der Firma Meier & Co.) und Aluminium (AlMgSi AA6016 entfettet der Fa. Chemetall) appliziert und a) nur getrocknet oder b) 30 min bei Raumtemperatur abgelüftet. Danach erfolgt Überlackierung mit einem Standard-Decklack (z.B. lösemittelbasierend mit 2-K-High solid lacken der Reihe GM40 der bei 60 °C über einen Zeitraum von 30 Minuten getrocknet wird oder 2-K-Wasserlacken der Reihe GW32 der BASF Coatings AG), der bei Raumtemperatur 30 min abgelüftet und dann bei 60°C über einen Zeitraum von 60 Minuten getrocknet wird.

### Tests:

Die Gitterschnittprüfung erfolgt nach DIN ISO 2409.

### Salzsprühnebeltest SS

| | |
|---|---|
| Spezifikation: | DIN 50 021-SS |
| Prüfgerät: | Korrosionsprüfgeräte gemäß DIN 50 021: |
| | SL 2000 und SL 2000 der Firma Liebisch |
| | VSNK 1500 S der Firma Heraeus-Vötsch |
| Prüfraumtemperatur: | 35 ± 2 °C kontinuierlich |
| Testzyklus: | Versprühung von wässriger NaCl-Lösung |
| Testparameter: | NaCl-Konzentration des Niederschlags = 50 ± 5 g/l |
| | pH-Wert des Niederschlags = 6,5 - 7,2 (bei 23 ± 2°C) |
| | Niederschlagsvolumen = 1,5 ± 0,5 ml/h*80cm² |
| Testdauer: | 24 h/Tag |

### Salzsprühnebeltest ESS

| | |
|---|---|
| Spezifikation: | DIN 50 021-ESS |
| Prüfgerät: | Korrosionsprüfgeräte gemäß DIN 50 021: |
| | SL 2000 und SL 2000 der Firma Liebisch |
| Prüfraumtemperatur: | 35 ± 2 °C kontinuierlich |
| Testzyklus: | Versprühung von wässriger NaCl-Lösung; essigsauer |
| Testparameter: | NaCl-Konzentration des Niederschlags = 50 ± 5 g/l |
| | pH-Wert des Niederschlags = 3,1- 3,3 (bei 23 ± 2°C) |
| | Niederschlagsvolumen = 1,5 ± 0,5 ml/h*80cm² |
| Testdauer: | 24 h/Tag |
| Kratzprobe: | |
| Relative Skala von 1-10, 1 = am schlechtesten, 10 = am besten | |
| Decklackstand | |
| Relative Skala von 1-10, 1 = am schlechtesten, 10 = am besten | |

### Testergebnisse:

| | **GT-Schnittprüfung** | **Salzsprühtest** | **ESS-Test** |
|---|---|---|---|
| **Beispiel 1** | GT 0 auf Stahl und Aluminium | Korrosionsbeständigkeit gut, Unterwanderung am Ritz < 3,5 mm nach 1 h Regeneration | Korrosionsbeständigkeit sehr gut, Unterwanderung am Ritz < 1 mm nach 1 h Regeneration |
| **Beispiel 2** | GT 0 auf Stahl und Aluminium | Korrosionsbeständigkeit gut, Unterwanderung am Ritz < 3,5 mm nach 1 h Regeneration | Korrosionsbeständigkeit gut, Unterwanderung am Ritz < 4 mm nach 1 h Regeneration |
| **Vergleichs-beispiel 3** | GT 5, Enthaftung auf Aluminium GT 0-1 auf Stahl | - | - |
| **Vergleichs-beispiel 4** | GT 5, Enthaftung auf Aluminium GT 1-2 auf Stahl | - | - |
| **Vergleichs-beispiel 5** | GT 5, Enthaftung auf Aluminium GT 0-1 auf Stahl | - | - |

## Patentansprüche

1. Beschichtungszusammensetzung umfassend
10 bis 20 Gew.-% mindestens einer isocyanathaltigen Verbindung,
5 bis 20 Gew.-% mindestens einer hydroxylgruppenhaltigen Verbindung,
5 bis 25 Gew.-% mindestens eines Aldimins und/oder Ketimins,
2.5 - 60 Gew.-% eines oder mehrerer Füllstoffe, farbgebende Pigmente und Korrosionsschutzpigmente,
wobei als der bzw. ein Füllstoff Calciumhydrogenphosphat in einem Massenanteil von 1.0 - 20 Gew.-% enthalten ist,
jeweils bezogen auf das Gesamtgewicht der Beschichtungszusammensetzung,
und mindestens ein Lösungsmittel,
**dadurch gekennzeichnet, dass** mindestens eine Silanverbindung der allgemeinen Formel (I), 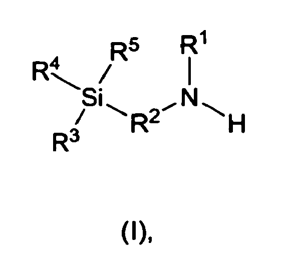 worin
R¹ für H; unsubstituiertes oder wenigstens einfach substituiertes Alkyl; unsubstituiertes oder wenigstens einfach substituiertes Heteroalkyl; unsubstituiertes oder wenigstens einfach substituiertes Cycloalkyl oder Cycloalkenyl; unsubstituiertes oder wenigstens einfach substituiertes Heterocycloalkyl oder Heterocycloalkenyl; unsubstituiertes oder wenigstens einfach substituiertes Aryl oder für unsubstituiertes oder wenigstens einfach substituiertes -(Alkylen)-Aryl oder -(Alkenylen)-Aryl steht;
R² für unsubstituiertes oder wenigstens einfach substituiertes -(Alkylen)-; unsubstituiertes oder wenigstens einfach substituiertes -(Heteroalkylen)-; unsubstituiertes oder wenigstens einfach substituiertes -(Arylen)-; unsubstituiertes oder wenigstens einfach substituiertes -(Alkylen)-(Arylen)- oder für unsubstituiertes oder wenigstens einfach substituiertes -(Heteroalkylen)-(Arylen)- steht;
R³ für -O-R⁶; -C(=O)-R⁷; H; unsubstituiertes oder substituiertes Alkyl; unsubstituiertes oder substituiertes Heteroalkyl; unsubstituiertes oder wenigstens einfach substituiertes Aryl oder für unsubstituiertes oder wenigstens einfach substituiertes -(Alkylen)-Aryl oder -(Alkenylen)-Aryl steht;
R⁴ für -O-R⁸; -C(=O)-R⁹; H; unsubstituiertes oder substituiertes Alkyl; unsubstituiertes oder substituiertes Heteroalkyl; unsubstituiertes oder wenigstens einfach substituiertes Aryl oder für unsubstituiertes oder wenigstens einfach substituiertes -(Alkylen)-Aryl oder -(Alkenylen)-Aryl steht;
R⁵ für -O-R¹⁰; -C(=O)-R¹¹; H; unsubstituiertes oder substituiertes Alkyl; unsubstituiertes oder substituiertes Heteroalkyl; unsubstituiertes oder wenigstens einfach substituiertes Aryl oder für unsubstituiertes oder wenigstens einfach substituiertes -(Alkylen)-Aryl oder -(Alkenylen)-Aryl steht;
und
R⁶, R⁷, R⁸, R⁹, R¹⁰ und R¹¹, unabhängig voneinander, jeweils für H; unsubstituiertes oder substituiertes Alkyl oder für unsubstituiertes oder substituiertes Heteroalkyl stehen;
in einem Massenanteil von 0.1 bis 5.0 Gew.-% bezogen auf das Gesamtgewicht der Beschichtungszusammensetzung enthalten ist, wobei die Massenanteile der genannten Bestandteile zusammen mit dem Lösungsmittel 100 Gew.-% ergeben.

2. Beschichtungszusammensetzung nach Anspruch 1, **dadurch gekennzeichnet, dass** 12 bis 20 Gew.-% mindestens einer isocyanathaltigen Verbindung enthalten sind.

3. Beschichtungszusammensetzung nach Anspruch 1 oder 2, **dadurch gekennzeichnet, dass** 8 bis 18 Gew.-% mindestens einer hydroxylgruppenhaltigen Verbindung enthalten sind.

4. Beschichtungszusammensetzung nach einem oder mehreren der Ansprüche 1 bis 3, **dadurch gekennzeichnet, dass** 8 bis 25 Gew.-% mindestens eines Aldimins und/oder Ketimins enthalten sind.

5. Beschichtungszusammensetzung nach einem oder mehreren der Ansprüche 1 bis 4, **dadurch gekennzeichnet, dass** 30 bis 60 Gew.-%, bevorzgut 40 bis 60 Gew.-% eines oder mehrerer Füllstoffe, farbgebender Pigmente und Korrosionsschutzpigmente enthalten sind.

6. Beschichtungszusammensetzung nach einem oder mehreren der Ansprüche 1 bis 5, **dadurch gekennzeichnet, dass** Calciumhydrogenphosphat in einem Massenanteil von 1 bis 10 Gew.-% enthalten ist.

7. Beschichtungszusammensetzung nach einem oder mehreren der Ansprüche 1 bis 6, **dadurch gekennzeichnet, dass** 0,1 bis 3 Gew.-% mindestens einer Silanverbindung der allgemeinen Formel (I) enthalten sind.

8. Beschichtungszusammensetzung nach einem oder mehreren der Ansprüche 1 bis 7, **dadurch gekennzeichnet, dass**
R¹ für H; einen Alkyl-Rest ausgewählt aus der Gruppe bestehend aus Methyl, Ethyl, n-Propyl, Isopropyl, n-Butyl, 2-Butyl, Isobutyl, tert-Butyl, n-Pentyl und n-Hexyl, der unsubstituiert oder mit ggf. 1, 2, 3, 4 oder 5 Substituenten unabhängig voneinander ausgewählt aus der Gruppe bestehend aus F, Cl, Br, I, -NO₂ und -CN substituiert ist; oder für einen Phenyl- oder Benzyl-Rest steht, der unsubstituiert oder mit 1, 2, 3, 4 oder 5 Substituenten unabhängig voneinander ausgewählt aus der Gruppe bestehend aus F, Cl, Br, I, -CN, -NO₂, Methyl, Ethyl, n-Propyl, Isopropyl, n-Butyl, Isobutyl, 2-Butyl, tert-Butyl, -O-CH₃, -O-C₂H₅, -O-C₃H₇, -O-C(CH₃)₃, -CF₃, -CHF₂ und -CH₂F substituiert ist;
R² für einen C₁₋₅-Akenylen-Rest steht, der unsubstituiert oder ggf. mit 1, 2 oder 3 Substituenten unabhängig voneinander ausgewählt aus der Gruppe bestehend aus F, Cl, Br, I, -NO₂ und -CN substituiert ist;
R³ für -O-R⁶; -C(=O)-R⁷; H; einen Alkyl-Rest ausgewählt aus der Gruppe bestehend aus Methyl, Ethyl, n-Propyl, Isopropyl, n-Butyl, 2-Butyl, Isobutyl, tert-Butyl, n-Pentyl und n-Hexyl steht, der unsubstituiert oder mit ggf. 1, 2, 3, 4 oder 5 Substituenten unabhängig voneinander ausgewählt aus der Gruppe bestehend aus F, Cl, Br, I, -NO₂ und -CN substituiert ist;
R⁴ für -O-R⁸; -C(=O)-R⁹; H; einen Alkyl-Rest ausgewählt aus der Gruppe bestehend aus Methyl, Ethyl, n-Propyl, Isopropyl, n-Butyl, 2-Butyl, Isobutyl, tert-Butyl, n-Pentyl und n-Hexyl steht, der unsubstituiert oder mit ggf. 1, 2, 3, 4 oder 5 Substituenten unabhängig voneinander ausgewählt aus der Gruppe bestehend aus F, Cl, Br, I, -NO₂ und -CN substituiert ist;
R⁵ für -O-R¹⁰; -C(=O)-R¹¹; H; einen Alkyl-Rest ausgewählt aus der Gruppe bestehend aus Methyl, Ethyl, n-Propyl, Isopropyl, n-Butyl, 2-Butyl, Isobutyl, tert-Butyl, n-Pentyl und n-Hexyl steht, der unsubstituiert oder mit ggf. 1, 2, 3, 4 oder 5 Substituenten unabhängig voneinander ausgewählt aus der Gruppe bestehend aus F, Cl, Br, I, -NO₂ und -CN substituiert ist;
und
R⁶, R⁷, R⁸, R⁹, R¹⁰ und R¹¹, unabhängig voneinander, jeweils für H oder für einen Alkyl-Rest ausgewählt aus der Gruppe bestehend aus Methyl, Ethyl, n-Propyl, Isopropyl, n-Butyl, 2-Butyl, Isobutyl, tert-Butyl, n-Pentyl und n-Hexyl stehen, der unsubstituiert oder mit ggf. 1, 2, 3, 4 oder 5 Substituenten unabhängig voneinander ausgewählt aus der Gruppe bestehend aus F, Cl, Br, I, -NO₂ und -CN substituiert ist.

9. Beschichtungszusammensetzung nach einem oder mehreren der Ansprüche 1 bis 8, **dadurch gekennzeichnet, dass**
R¹ für H; einen Alkyl-Rest ausgewählt aus der Gruppe bestehend aus Methyl, Ethyl, n-Propyl, Isopropyl, n-Butyl, 2-Butyl, Isobutyl, tert-Butyl, n-Pentyl und n-Hexyl, der unsubstituiert ist; oder für einen Phenyl-Rest steht, der unsubstituiert oder mit 1, 2, 3, 4 oder 5 Substituenten unabhängig voneinander ausgewählt aus der Gruppe bestehend aus F, Cl, Br und Methyl substituiert ist;
R² für -(CH₂)-, -(CH₂)₂-, -(CH₂)₃-, -(CH₂)₄- oder -(CH₂)₅- steht;
R³ für -O-R⁶ oder H steht;
R⁴ für -O-R⁸ oder H steht;
R⁵ für -O-R¹⁰ oder H steht;
und
R⁶, R⁸ und R¹⁰ , unabhängig voneinander, jeweils für H oder für einen Alkyl-Rest ausgewählt aus der Gruppe bestehend aus Methyl, Ethyl, n-Propyl, Isopropyl, n-Butyl, 2-Butyl, Isobutyl, tert-Butyl, n-Pentyl und n-Hexyl stehen, der unsubstituiert ist.

10. Beschichtungszusammensetzung nach einem oder mehreren der Ansprüche 1 bis 9, **dadurch gekennzeichnet, dass**
R¹ für H; oder für einen Phenyl-Rest steht, der unsubstituiert oder mit 1, 2, 3, 4 oder 5 Substituenten unabhängig voneinander ausgewählt aus der Gruppe bestehend aus F, Cl, Br und Methyl substituiert ist;
R² für -(CH₂)₃- steht;
R³ für -O-R⁶ steht;
R⁴ für -O-R⁸ steht;
R⁵ für -O-R¹⁰ steht;
und
R⁶, R⁸ und R¹⁰, unabhängig voneinander, jeweils für einen Methyl- oder Ethyl-Rest stehen.

11. Beschichtungszusammensetzung nach einem oder mehreren der Ansprüche 1 bis 10, **dadurch gekennzeichnet, dass** das Calciumhydrogenphosphat eine durchschnittliche Partikelgröße von 1.0 bis 10.0 µm, bevorzugt von 2.5 bis 4.0 µm, aufweist.

12. Beschichtungszusammensetzung nach einem oder mehreren der Ansprüche 1 bis 11, **dadurch gekennzeichnet, dass** die Zusammensetzung mindestens ein Ketimin enthält.

13. Beschichtungszusammensetzung nach einem oder mehreren der Ansprüche 1 bis 12, **dadurch gekennzeichnet, dass** die isocyanathaltige Verbindung ein Polyisocyanat oder ein durch Oligomerisierung, Trimerisierung, Dimerisierung, Urethan-, Biuret-, Urethdion oder Allophanatbildung von einem Polyisocyanat abgeleitetes Polyisocyanat oder eine Mischung aus diesen ist.

14. Beschichtungszusammensetzung nach Anspruch 13, **dadurch gekennzeichnet, dass** das Polyisocyanat auf einem Grundkörper ausgewählt aus der Gruppe bestehend aus Hexamethylendiisocyanat, Isophorondiisocyanat und (4,4')-Methylendicyclohexyldiisocyanat basiert.

15. Beschichtungszusammensetzung nach einem oder mehreren der Ansprüche 1 bis 14, **dadurch gekennzeichnet, dass** die hydroxylgruppenhaltige Verbindung ein niedermolekulares Polyol, ein oligomeres Polyol, ein polymeres Polyol oder eine Mischung dieser Polyole ist.

16. Beschichtungszusammensetzung nach einem oder mehreren der Ansprüche 1 bis 15, **dadurch gekennzeichnet, dass** die hydroxylgruppenhaltige Verbindung ein Polyol mit Ester- und/oder Ethergruppen ist.

17. Beschichtungszusammensetzung nach einem oder mehreren der Ansprüche 1 bis 16, **dadurch gekennzeichnet, dass** sie ≤ 540 g/l, bevorzugt ≤ 280 g/l, leichtflüchtiger organischer Verbindungen umfasst.

18. Verfahren zur Herstellung einer Beschichtungszusammensetzung nach einem der Ansprüche 1 bis 17, **dadurch gekennzeichnet, dass** eine Zusammensetzung umfassend die mindestens eine hydroxylgruppenhaltige Verbindung mit einer Zusammensetzung umfassend die mindestens eine isocyanathaltige Verbindung vermischt wird.

19. Verfahren zur Herstellung einer Beschichtungszusammensetzung nach Anspruch 18, **dadurch gekennzeichnet, dass** bei dieser Vermischung eine weitere, das mindestens eine Aldimin und/oder Ketimin umfassende Zusammensetzung beigemischt wird.

20. Verfahren zur Herstellung einer Beschichtungszusammensetzung nach Anspruch 18 oder 19, **dadurch gekennzeichnet, dass** bei dieser Vermischung mindestens eine Silanverbindung der allgemeinen Formel (I) beigemischt wird.

21. Verfahren zur Herstellung einer Beschichtungszusammensetzung nach einem oder mehreren der Ansprüche 18 bis 20, **dadurch gekennzeichnet, dass** die mindestens eine hydroxylgruppenhaltige Verbindung umfassende Zusammensetzung dabei das bzw. die Füllstoffe, farbgebende Pigmente und Korrosionsschutzpigmente enthält.

22. Verwendung einer Beschichtungszusammensetzung nach einem oder mehreren der Ansprüche 1 bis 17 als Lack im Autoreparatur- Fahrzeug-, Nutzfahrzeug und Landmaschinenbereich.

23. Verwendung einer Beschichtungszusammensetzung nach einem oder mehreren der Ansprüche 1 bis 17 als Grundierung auf Aluminium, Stahl, Kunststoff und Multistoffsubstraten.

24. Beschichtetes Substrat herstellbar durch Beschichten eines Substrats mit einer Beschichtungszusammensetzung nach einem der Ansprüche 1 bis 17 und Härten der Beschichtung.

## Claims

1. A coating composition comprising
10% to 20% by weight of at least one isocyanate compound,
5% to 20% by weight of at least one hydroxyl-containing compound, 5% to 25% by weight of at least one aldimine and/or ketimine,
2.5% - 60% by weight of one or more fillers, color pigments and anticorrosion pigments,
calcium hydrogen phosphate being included in a mass fraction of 1.0% - 20% by weight as the filler or as a filler,
based in each case on the total weight of the coating composition,
and at least one solvent,
wherein at least one silane compound of the general formula (I), 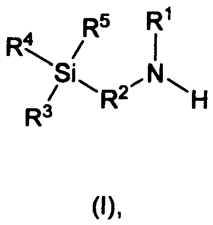 in which
R¹ is H; unsubstituted or at least monosubstituted alkyl; unsubstituted or at least monosubstituted heteroalkyl; unsubstituted or at least monosubstituted cycloalkyl or cycloalkenyl; unsubstituted or at least monosubstituted heterocycloalkyl or heterocycloalkenyl; unsubstituted or at least monosubstituted aryl; or unsubstituted or at least monosubstituted -(alkylene)-aryl or -(alkenylene)-aryl;
R² is unsubstituted or at least monosubstituted -(alkylene)-; unsubstituted or at least monosubstituted -(heteroalkylene)-; unsubstituted or at least monosubstituted-(arylene)-; unsubstituted or at least monosubstituted -(alkylene)-(arylene)-; or unsubstituted or at least monosubstituted -(heteroalkylene)-(arylene)-;
R³ is -O-R⁶; -C(=O)-R⁷; H; unsubstituted or substituted alkyl; unsubstituted or substituted heteroalkyl; unsubstituted or at least monosubstituted aryl; or unsubstituted or at least monosubstituted -(alkylene)-aryl or -(alkenylene)-aryl;
R⁴ is -O-R⁸; -C(=O)-R⁹; H; unsubstituted or substituted alkyl; unsubstituted or substituted heteroalkyl; unsubstituted or at least monosubstituted aryl; or unsubstituted or at least monosubstituted -(alkylene)-aryl or -(alkenylene)-aryl;
R⁵ is -O-R¹⁰; -C(=O)-R¹¹; H; unsubstituted or substituted alkyl; unsubstituted or substituted heteroalkyl; unsubstituted or at least monosubstituted aryl; or unsubstituted or at least monosubstituted -(alkylene)-aryl or -(alkenylene)-aryl;
and
R⁶, R⁷, R⁸, R⁹, R¹⁰, and R¹¹, independently of one another, are each H; unsubstituted or substituted alkyl; or unsubstituted or substituted heteroalkyl;
is included in a mass fraction of 0.1% to 5.0% by weight, based on the total weight of the coating composition, the mass fractions of the stated constituents adding, together with the solvent, to 100% by weight.

2. The coating composition as claimed in claim 1, containing 12% to 20% by weight of at least one isocyanate compound.

3. The coating composition as claimed in claim 1 or 2, containing 8% to 18% by weight of at least one hydroxyl-containing compound.

4. The coating composition as claimed in one or more of claims 1 to 3, containing 8% to 25% by weight of at least one aldimine and/or ketimine.

5. The coating composition as claimed in one or more of claims 1 to 4, containing 30% to 60% by weight, preferably 40% to 60% by weight, of one or more fillers, color pigments, and anticorrosion pigments.

6. The coating composition as claimed in one or more of claims 1 to 5, containing calcium hydrogen phosphate in a mass fraction of 1% to 10% by weight.

7. The coating composition as claimed in one or more of claims 1 to 6, containing 0.1% to 3% by weight of at least one silane compound of the general formula (I).

8. The coating composition as claimed in one or more of claims 1 to 7, wherein
R¹ is H; an alkyl radical selected from the group consisting of methyl, ethyl, n-propyl, isopropyl, n-butyl, 2-butyl, isobutyl, tert-butyl, n-pentyl, and n-hexyl or which is unsubstituted or substituted by, where appropriate, 1, 2, 3, 4 or 5 substituents selected independently of one another from the group consisting of F, Cl, Br, I, -NO₂, and -CN; or is a phenyl or benzyl radical which is unsubstituted or substituted by 1, 2, 3, 4 or 5 substituents selected independently of one another from the group consisting of F, Cl, Br, I, -CN, -NO₂, methyl, ethyl, n-propyl, isopropyl, n-butyl, isobutyl, 2-butyl, tert-butyl, -O-CH₃, -O-C₂H₅, -O-C₃H₇, -O- C(CH₃)₃, -CF₃, -CHF₂, and -CH₂F;
R² is a C₁₋₅-alkenylene radical which is unsubstituted or substituted, where appropriate, by 1, 2 or 3 substituents selected independently of one another from the group consisting of F, Cl, Br, I, -NO₂, and -CN;
R³ is -O-R⁶; -C(=O)-R⁷; H; an alkyl radical selected from the group consisting of methyl, ethyl, n-propyl, isopropyl, n-butyl, 2-butyl, isobutyl, tert-butyl, n-pentyl, and n-hexyl which is unsubstituted or substituted by, where appropriate, 1, 2, 3, 4 or 5 substituents selected independently of one another from the group consisting of F, Cl, Br, I, -NO₂, and -CN;
R⁴ is -O-R⁸; -C(=O)-R⁹; H; an alkyl radical selected from the group consisting of methyl, ethyl, n-propyl, isopropyl, n-butyl, 2-butyl, isobutyl, tert-butyl, n-pentyl, and n-hexyl which is unsubstituted or substituted by, where appropriate, 1, 2, 3, 4 or 5 substituents selected independently of one another from the group consisting of F, Cl, Br, I, -NO₂, and -CN;
R⁵ is -O-R¹⁰; -C(=O)-R¹¹; H; an alkyl radical selected from the group consisting of methyl, ethyl, n-propyl, isopropyl, n-butyl, 2-butyl, isobutyl, tert-butyl, n-pentyl, and n-hexyl which is unsubstituted or substituted by, where appropriate, 1, 2, 3, 4 or 5 substituents selected independently of one another from the group consisting of F, Cl, Br, I, -NO₂, and -CN; and
R⁶, R⁷, R⁸, R⁹, R¹⁰, and R¹¹, independently of one another, in each case are H or are an alkyl radical selected from the group consisting of methyl, ethyl, n-propyl, isopropyl, n-butyl, 2-butyl, isobutyl, tert-butyl, n-pentyl, and n-hexyl which is unsubstituted or substituted by, where appropriate, 1, 2, 3, 4 or 5 substituents selected independently of one another from the group consisting of F, Cl, Br, I, -NO₂, and -CN.

9. The coating composition as claimed in one or more of claims 1 to 8, wherein
R¹ is H; an alkyl radical selected from the group consisting of methyl, ethyl, n-propyl, isopropyl, n-butyl, 2-butyl, isobutyl, tert-butyl, n-pentyl, and n-hexyl which is unsubstituted; or is a phenyl radical which is unsubstituted or substituted by 1, 2, 3, 4 or 5 substituents selected independently of one another from the group consisting of F, Cl, Br, and methyl;
R² is -(CH₂)-, -(CH₂)₂-, -(CH₂)₃-, -(CH₂)₄- or -(CH₂)₅-;
R³ is -O-R⁶ or H;
R⁴ is -O-R³ or H;
R⁵ is -O-R¹⁰ or H;
and
R⁶, R⁸, and R¹⁰, independently of one another, in each case are H or are an alkyl radical selected from the group consisting of methyl, ethyl, n-propyl, isopropyl, n-butyl, 2-butyl, isobutyl, tert-butyl, n-pentyl, and n-hexyl which is unsubstituted.

10. The coating composition as claimed in one or more of claims 1 to 9, wherein
R¹ is H; or is a phenyl radical which is unsubstituted or substituted by 1, 2, 3, 4 or 5 substituents selected independently of one another from the group consisting of F, Cl, Br, and methyl;
R² is -(CH₂)₃-;
R³ is -O-R⁶ ;
R⁴ is -O-R⁸;
R⁵ is -O-R¹⁰;
and
R⁶, R⁸, and R¹⁰, independently of one another, in each case are a methyl or ethyl radical.

11. The coating composition as claimed in one or more of claims 1 to 10, wherein the calcium hydrogen phosphate has an average particle size of 1.0 to 10.0 µm, preferably of 2.5 to 4.0 µm.

12. The coating composition as claimed in one or more of claims 1 to 11, wherein the composition comprises at least one ketimine.

13. The coating composition as claimed in one or more of claims 1 to 12, wherein the isocyanate compound is a polyisocyanate, a polyisocyanate derived from a polyisocyanate by oligomerization, trimerization, dimerization, urethane formation, biuret formation, urethdione formation or allophanate formation, or a mixture of these.

14. The coating composition as claimed in claim 13, wherein the polyisocyanate is based on a parent structure selected from the group consisting of hexamethylene diisocyanate, isophorone diisocyanate, and methylene dicyclohexyl 4,4'-diisocyanate.

15. The coating composition as claimed in one or more of claims 1 to 14, wherein the hydroxyl-containing compound is a low molecular mass polyol, an oligomeric polyol, a polymeric polyol or a mixture of these polyols.

16. The coating composition as claimed in one or more of claims 1 to 15, wherein the hydroxyl-containing compound is a polyol having ester and/or ether groups.

17. The coating composition as claimed in one or more of claims 1 to 16, comprising ≤ 540 g/l, preferably ≤ 280 g/l, of volatile organic compounds.

18. A process for preparing a coating composition as claimed in any one of claims 1 to 17, which comprises mixing a composition comprising the at least one hydroxyl-containing compound with a composition comprising the at least one isocyanate compound.

19. The process for preparing a coating composition as claimed in claim 18, wherein this mixing is accompanied by the admixing of a further composition comprising said at least one aldimine and/or ketimine.

20. The process for preparing a coating composition as claimed in claim 18 or 19, wherein this mixing is accompanied by the admixing of at least one silane compound of the general formula (I).

21. The process for preparing a coating composition as claimed in one or more of claims 18 to 20, wherein the composition comprising at least one hydroxyl-containing compound comprises the filler or fillers, color pigments, and anticorrosion pigments.

22. The use of a coating composition as claimed in one or more of claims 1 to 17 as a coating material in the automotive refinish, vehicle, utility-vehicle or agricultural-machinery segment.

23. The use of a coating composition as claimed in one or more of claims 1 to 17 as a primer on aluminum, steel, plastic or multimaterial substrates.

24. A coated substrate producible by coating a substrate with a coating composition as claimed in any one of claims 1 to 17 and curing the coating.

## Revendications

1. Composition de revêtement, comprenant
- 10 à 20% en poids d'au moins un composé contenant isocyanate,
- 5 à 20% en poids d'au moins un composé contenant des groupes hydroxyle,
- 5 à 25% en poids d'au moins une aldimine et/ou cétimine,
- 2,5-60% en poids d'une ou de plusieurs charges, pigments conférant une teinte et pigments de protection contre la corrosion,
de l'hydrogénophosphate de calcium étant contenu comme charge ou, selon le cas, comme une des charges, en une proportion massique de 1,0-20% en poids,
à chaque fois par rapport au poids total de la composition de revêtement, et au moins un solvant, **caractérisée en ce qu'**au moins un composé de silane de formule générale (I) est contenu 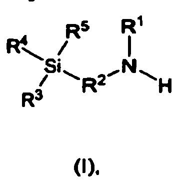 où
R¹ représente H ; alkyle non substitué ou au moins monosubstitué ; hétéroalkyle non substitué ou au moins monosubstitué ; cycloalkyle ou cycloalcényle non substitué ou au moins monosubstitué ;
R² hétérocycloalkyle ou hétérocycloalcényle non substitué ou au moins monosubstitué ; aryle non substitué ou au moins monosubstitué ou -(alkylène)-aryle ou -(alcénylène)-aryle non substitué ou au moins monosubstitué ; représente -(alkylène)- non substitué ou au moins monosubstitué ; -(hétéroalkylène)- non substitué ou au moins monosubstitué ; -(arylène)- non substitué ou au moins monosubstitué ; -(alkylène)-(arylène)- non substitué ou au moins monosubstitué ou -(hétéroalkylène)-(arylène)- non substitué ou au moins monosubstitué ;
R³ représente -O-R⁶; -C(=O)-R⁷ ; H ; alkyle non substitué ou substitué ; hétéroalkyle non substitué ou substitué ; aryle non substitué ou au moins monosubstitué ou -(alkylène)-aryle ou -(alcénylène)-aryle non substitué ou au moins monosubstitué ;
R⁴ représente -O-R⁸ ; -C(=O)-R⁹ ; H ; alkyle non substitué ou substitué ; hétéroalkyle non substitué ou substitué ; aryle non substitué ou au moins monosubstitué ou -(alkylène)-aryle ou -(alcénylène)-aryle non substitué ou au moins monosubstitué ;
R⁵ représente -O-R¹⁰ ; -C(=O)-R¹¹ ; H ; alkyle non substitué ou substitué ; hétéroalkyle non substitué ou substitué ; aryle non substitué ou au moins monosubstitué ou -(alkylène)-aryle ou -(alcénylène)-aryle non substitué ou au moins monosubstitué ; et
R⁶, R⁷, R⁸, R⁹, R¹⁰ et R¹¹, représentent, indépendamment les uns des autres, à chaque fois H ; alkyle non substitué ou substitué ou hétéroalkyle non substitué ou substitué ;
en une proportion massique de 0,1 à 5,0% en poids par rapport au poids total de la composition de revêtement, la somme des proportions massiques des constituants mentionnés, ensemble avec le solvant, valant 100% en poids.

2. Composition de revêtement selon la revendication 1, **caractérisée en ce que** 12 à 20% en poids d'au moins un composé contenant isocyanate sont contenus.

3. Composition de revêtement selon la revendication 1 ou 2, **caractérisée en ce que** 8 à 18% en poids d'au moins un composé contenant des groupes hydroxyle sont contenus.

4. Composition de revêtement selon l'une ou plusieurs des revendications 1 à 3, **caractérisée en ce que** 8 à 25% en poids d'au moins une aldimine et/ou cétimine sont contenus.

5. Composition de revêtement selon l'une ou plusieurs des revendications 1 à 4, **caractérisée en ce que** 30 à 60% en poids, de préférence 40 à 60% en poids, d'une ou de plusieurs charges, pigments conférant une teinte et pigments de protection contre la corrosion sont contenus.

6. Composition de revêtement selon l'une ou plusieurs des revendications 1 à 5, **caractérisée en ce que** l'hydrogénophosphate de calcium est contenu en une proportion massique de 1 à 10% en poids.

7. Composition de revêtement selon l'une ou plusieurs des revendications 1 à 6, **caractérisée en ce que** 0,1 à 3% en poids d'au moins un composé de silane de formule générale (I) sont contenus.

8. Composition de revêtement selon l'une ou plusieurs des revendications 1 à 7, **caractérisée en ce que**
R¹ représente H ; un radical alkyle choisi dans le groupe constitué par méthyle, éthyle, n-propyle, isopropyle, n-butyle, 2-butyle, isobutyle, tert- butyle, n-pentyle et n-hexyle, qui est non substitué ou le cas échéant substitué par 1, 2, 3, 4 ou 5 substituants choisis indépendamment l'un de l'autre dans le groupe constitué par F, Cl, Br, I, -NO₂ et -CN ; ou un radical phényle ou benzyle, qui est non substitué ou substitué par 1, 2, 3, 4 ou 5 substituants choisis indépendamment l'un de l'autre dans le groupe constitué par F, Cl, Br, I, -CN, -NO₂, méthyle, éthyle, n-propyle, isopropyle, n-butyle, isobutyle, 2-butyle, tert-butyle, -O-CH₃, -O-C₂H₅, -O-C₃H₇, -O-C(CH₃)₃, -CF₃, -CHF₂ et -CH₂F ;
R² représente un radical C₁₋₅-alcénylène, qui est non substitué ou le cas échéant substitué par 1, 2 ou 3 substituants choisis indépendamment l'un de l'autre dans le groupe constitué par F, Cl, Br, I, -NO₂ et -CN ;
R³ représente -O-R⁶ ; -C(=O)-R⁷; H; un radical alkyle choisi dans le groupe constitué par méthyle, éthyle, n-propyle, isopropyle, n-butyle, 2-butyle, isobutyle, tert-butyle, n-pentyle et n-hexyle, qui est non substitué ou le cas échéant substitué par 1, 2, 3, 4 ou 5 substituants choisis indépendamment l'un de l'autre dans le groupe constitué par F, Cl, Br, I, -NO₂ et -CN ;
R⁴ représente -O-R⁸ ; -C(=O)-R⁹ ; H ; un radical alkyle choisi dans le groupe constitué par méthyle, éthyle, n-propyle, isopropyle, n-butyle, 2-butyle, isobutyle, tert-butyle, n-pentyle et n-hexyle, qui est non substitué ou le cas échéant substitué par 1, 2, 3, 4 ou 5 substituants choisis indépendamment l'un de l'autre dans le groupe constitué par F, Cl, Br, I, -NO₂ et -CN ;
R⁵ représente -O-R¹⁰ ; -C(=O)-R¹¹ ; H ; un radical alkyle choisi dans le groupe constitué par méthyle, éthyle, n-propyle, isopropyle, n-butyle, 2-butyle, isobutyle, tert-butyle, n-pentyle et n-hexyle, qui est non substitué ou le cas échéant substitué par 1, 2, 3, 4 ou 5 substituants choisis indépendamment l'un de l'autre dans le groupe constitué par F, Cl, Br, I, -NO₂ et -CN ; et
R⁶, R⁷, R⁸, R⁹, R¹⁰ et R¹¹, représentent, indépendamment les uns des autres, à chaque fois H ou un radical alkyle choisi dans le groupe constitué par méthyle, éthyle, n-propyle, isopropyle, n-butyle, 2-butyle, isobutyle, tert-butyle, n-pentyle et n-hexyle, qui est non substitué ou le cas échéant substitué par 1, 2, 3, 4 ou 5 substituants choisis indépendamment l'un de l'autre dans le groupe constitué par F, Cl, Br, I, -NO₂ et -CN.

9. Composition de revêtement selon l'une ou plusieurs des revendications 1 à 8, **caractérisée en ce que**
R¹ représente H ; un radical alkyle choisi dans le groupe constitué par méthyle, éthyle, n-propyle, isopropyle, n-butyle, 2-butyle, isobutyle, tert-butyle, n-pentyle et n-hexyle, qui est non substitué ; ou un radical phényle, qui est non substitué ou substitué par 1, 2, 3, 4 ou 5 substituants choisis indépendamment l'un de l'autre dans le groupe constitué par F, Cl, Br et méthyle ;
R² représente -(CH₂)-, -(CH₂)₂-, -(CH₂)₃-, -(CH₂)₄- ou -(CH₂)₅- ;
R³ représente -O-R⁶ ou H ;
R⁴ représente -O-R⁸ ou H ;
R⁵ représente -O-R¹⁰ ou H ; et
R⁶, R⁸ et R¹⁰, représentent, indépendamment les uns des autres, à chaque fois H ou un radical alkyle choisi dans le groupe constitué par méthyle, éthyle, n-propyle, isopropyle, n-butyle, 2-butyle, isobutyle, tert-butyle, n-pentyle et n-hexyle, qui est non substitué.

10. Composition de revêtement selon l'une ou plusieurs des revendications 1 à 9, **caractérisée en ce que**
R¹ représente H ; ou un radical phényle, qui est non substitué ou le cas échéant substitué par 1, 2, 3, 4 ou 5 substituants choisis indépendamment l'un de l'autre dans le groupe constitué par F, Cl, Br et méthyle ;
R² représente -(CH₂)₃- ;
R³ représente -O-R⁶ ;
R⁴ représente -O-R⁸ ;
R⁵ représente -O-R¹⁰ ; et
R⁶, R⁸ et R¹⁰, représentent, indépendamment les uns des autres, à chaque fois un radical méthyle ou éthyle.

11. Composition de revêtement selon l'une ou plusieurs des revendications 1 à 10, **caractérisée en ce que** l'hydrogénophosphate de calcium présente une grosseur moyenne des particules de 1,0 à 10,0 µm, de préférence de 2,5 à 4,0 µm.

12. Composition de revêtement selon l'une ou plusieurs des revendications 1 à 11, **caractérisée en ce que** la composition contient au moins une cétimine.

13. Composition de revêtement selon l'une ou plusieurs des revendications 1 à 12, **caractérisée en ce que** le composé contenant isocyanate est un polyisocyanate ou un polyisocyanate dérivé d'un polyisocyanate par oligomérisation, trimérisation, dimérisation, formation d'uréthane, formation de biuret, formation d'uretdione ou formation d'allophanate ou un mélange de ceux-ci.

14. Composition de revêtement selon la revendication 13, **caractérisée en ce que** le polyisocyanate est à base d'un corps de base choisi dans le groupe constitué par l'hexaméthylènediisocyanate, l'isophoronediisocyanate et le (4,4')-méthylènedicyclohexyldiisocyanate.

15. Composition de revêtement selon l'une ou plusieurs des revendications 1 à 14, **caractérisée en ce que** le composé contenant des groupes hydroxyle est un polyol de bas poids moléculaire, un polyol oligomère, un polyol polymère ou un mélange de ces polyols.

16. Composition de revêtement selon l'une ou plusieurs des revendications 1 à 15, **caractérisée en ce que** le composé contenant des groupes hydroxyle est un polyol présentant des groupes ester et/ou éther.

17. Composition de revêtement selon l'une ou plusieurs des revendications 1 à 16, **caractérisée en ce qu'**elle comprend ≤ 540 g/l, de préférence ≤ 280 g/l, de composés organiques volatils.

18. Procédé pour la préparation d'une composition de revêtement selon l'une quelconque des revendications 1 à 17, **caractérisé en ce qu'**une composition comprenant ledit au moins un composé contenant des groupes hydroxyle est mélangée avec une composition comprenant ledit au moins un composé contenant isocyanate.

19. Procédé pour la préparation d'une composition de revêtement selon la revendication 18, **caractérisé en ce qu'**on introduit dans ce mélange une autre composition, comprenant au moins une aldimine et/ou une cétimine.

20. Procédé pour la préparation d'une composition de revêtement selon la revendication 18 ou 19, **caractérisé en ce qu'**au moins un composé de silane de formule générale (I) est introduit lors de ce mélange.

21. Procédé pour la préparation d'une composition de revêtement selon l'une ou plusieurs des revendications 18 à 20, **caractérisé en ce que** la composition comprenant ledit au moins un composé contenant des groupes hydroxyle contient le ou, selon le cas, les charges, les pigments conférant une teinte et les pigments de protection contre la corrosion.

22. Utilisation d'une composition de revêtement selon l'une ou plusieurs des revendications 1 à 17 comme laque dans le domaine de la réparation de voitures, des véhicules, des véhicules utilitaires et des machines agricoles.

23. Utilisation d'une composition de revêtement selon l'une ou plusieurs des revendications 1 à 17 comme couche de fond sur de l'aluminium, de l'acier, un matériau synthétique et des substrats en matériaux multiples.

24. Substrat revêtu, pouvant être produit par revêtement d'un substrat présentant une composition de revêtement selon l'une quelconque des revendications 1 à 17 et durcissement du revêtement.
